# EUROPEAN PATENT SPECIFICATION

(11) **EP 0 772 659 B1**
(45) Date of publication and mention of the grant of the patent: **19.09.2001**
(21) Application number: 95925949.0
(22) Date of filing: 24.07.1995
(51) Int. Cl.: C09K 5/04

(54) **REFRIGERANT COMPOSITIONS**
KÜHLZUSAMMENSETZUNGEN
COMPOSITIONS REFRIGERANTES

(30) Priority: 27.07.1994 GB 9415140
(43) Date of publication of application: 14.05.1997
(73) Proprietor: Ineos Fluor Holdings Limited, Southampton, Hampshire SO14 3BP (GB)
(72) Inventor: POWELL, Richard, Llewellyn, Tarporley Cheshire CW6 9NV (GB); CORR, Stuart, Warrington Cheshire WA4 5DH (GB); MURPHY, Frederick, Thomas, Frodsham Cheshire WA6 7RY (GB); MORRISON, James, David, Northwich Cheshire CW8 2QN (GB)
(74) Representative: Dee, Ian Mark
(86) International application number: GB9501737
(87) International publication number: WO9603473

(56) References cited:
- EP-A- 0 430 169
- EP-A- 0 509 673
- EP-A- 0 659 862
- WO-A-92/11339
- DATABASE WPI Week 9436 Derwent Publications Ltd., London, GB; AN 94-291153 & JP-A-06 220 430 (SANYO) , 9 August 1994
- PATENT ABSTRACTS OF JAPAN vol. 018 no. 591 (C-1272) ,11 November 1994 & JP,A,62 020430 (SANYO) 9 August 1994,

## Description

This invention relates to refrigerant compositions and to the use of such compositions in heat transfer devices such as refrigeration and air conditioning systems. The invention relates, in particular, to refrigerant compositions which can be used in the air conditioning and low temperature refrigeration applications currently satisfied by chlorodifluoromethane (refrigerant R-22) and the azeotropic mixture of chlorodifluoromethane and chloropentafluoroethane (refrigerant R-115); the azeotrope being refrigerant R-502.

Heat transfer devices of the mechanical compression type such as refrigerators, freezers, heat pumps and air conditioning systems are well known. In such devices a refrigerant liquid of a suitable boiling point evaporates at low pressure taking heat from a surrounding heat transfer fluid. The resulting vapour is then compressed and passes to a condenser where it condenses and gives off heat to another heat transfer fluid. The condensate is then returned through an expansion valve to the evaporator so completing the cycle. The mechanical energy required for compressing the vapour and pumping the liquid may be provided by an electric motor or an internal combustion engine.

In addition to having a suitable boiling point and a high latent heat of vaporisation, the properties preferred for a refrigerant include low toxicity, non-flammability, non-corrosivity, high stability and freedom from objectionable odour.

Hitherto, heat transfer devices have tended to use fully and partially halogenated chlorofluorocarbon refrigerants such as trichlorofluoromethane (refrigerant R-11), dichlorodifluoromethane (refrigerant R-12), chlorodifluoromethane (refrigerant R-22) and the azeotropic mixture of chlorodifluoromethane and chloropentafluoroethane (refrigerant R-115); the azeotrope being refrigerant R-502. In particular, refrigerant R-22 has found widespread use in air conditioning and low temperature refrigeration applications while refrigerant R-502 has been widely used in low temperature refrigeration applications.

However, the fully and partially halogenated chlorofluorocarbons have been implicated in the destruction of the earth's protective ozone layer and as a result the use and production thereof has been limited by international agreement.

Whilst heat transfer devices of the type to which the present invention relates are essentially closed systems, loss of refrigerant to the atmosphere can occur due to leakage during operation of the equipment or during maintenance procedures. It is important, therefore, to replace fully and partially halogenated chlorofluorocarbon refrigerants by materials having low or zero ozone depletion potentials.

Replacements for some of the chlorofluorocarbon refrigerants presently in use have already been developed. These replacement refrigerants tend to comprise selected hydrofluorocarbons, i.e. compounds which contain only carbon, hydrogen and fluorine atoms in their structure. Thus, refrigerant R-12 is generally being replaced by 1,1,1,2-tetrafluoroethane (R-134a).

In a heat transfer device, the refrigerant forms part of a working fluid composition which also comprises a lubricant. The lubricant circulates around the device along with the refrigerant and provides for continual lubrication of the compressor. In addition to possessing good lubricity in the presence of the refrigerant, the properties desired of a lubricant include good hydrolytic stability and good thermal stability. Moreover, in order to provide for the return of the lubricant to the compressor, the lubricant should be compatible with the refrigerant, which in practice means that the lubricant and refrigerant should possess a degree of mutual solubility, i.e. the lubricant and the refrigerant should be at least partially soluble in one another.

Hitherto, heat transfer devices have tended to use mineral oils as lubricants. The good solubility of chlorofluorocarbons with mineral oils allows the mineral oil to circulate around the heat transfer device together with the chlorofluorocarbon, and this in turn ensures effective lubrication of the compressor. Unfortunately, however, the replacement refrigerants tend to have different solubility characteristics to the chlorofluorocarbons presently in use and tend to be insufficiently soluble in mineral oils to allow the latter to be used as lubricants.

Consequently, the need to replace the chlorofluorocarbon refrigerants has presented industry with very real difficulties, since not only is there the problem of finding a viable replacement refrigerant which has the required low or zero ozone depletion potential, but also, in many cases, there is also the problem of developing a lubricant which will perform satisfactorily with the replacement refrigerant.

The present invention provides a refrigerant composition comprising a mixture of compounds having zero ozone depletion potentials which can be used together with a mineral oil or alkyl benzene type lubricant in the air conditioning and low temperature refrigeration applications currently satisfied by refrigerants R-22 and R-502.

According to the present invention there is provided a composition for use in a heat transfer device such as a refrigeration or air conditioning system comprising:
(A) at least one hydrofluorocarbon selected from the group consisting of difluoromethane (R-32) and 1,1,1-trifluoroethane (R-143a);
(B) pentafluoroethane (R-125);
(C) at least one hydrocarbon; and optionally
(D) at least one hydrofluorocarbon selected from the group consisting of 1,1,1,2-tetrafluoroethane (R-134a) and 1,1,2,2-tetrafluoroethane (R-134).

The present invention also provides a heat transfer device, such as a refrigeration or air conditioning system, comprising an evaporator, a condenser, a compressor and an expansion valve in which there is contained a composition comprising:
(A) at least one hydrofluorocarbon selected from the group consisting of difluoromethane (R-32) and 1,1,1-trifluoroethane (R-143a);
(B) pentafluoroethane (R-125);
(C) at least one hydrocarbon; and optionally
(D) at least one hydrofluorocarbon selected from the group consisting of 1,1,1,2-tetrafluoroethane (R-134a) and 1,1,2,2-tetrafluoroethane (R-134).

The composition of the invention comprises at least components A to C.

Component (A) comprises at least one hydrofluorocarbon selected from the group consisting of difluoromethane (R-32) and 1,1,1-trifluoroethane (R-143a). Although component (A) may be a mixture of R-32 and R-143a, it will preferably contain just one of these compounds.

Component (B) is pentafluoroethane (R-125) which can form an azeotropic or azeotrope-like mixture with the R-32 and/or R-143a making up component (A).

The at least one hydrocarbon making up component (C) tends to dissolve in a mineral oil or alkyl benzene lubricant and this property can allow the composition of the invention to transport such a lubricant around a heat transfer device and return it to the compressor. As a result, heat transfer devices which employ the composition of the invention as the refrigerant may be able to employ inexpensive lubricants based on mineral oils or alkyl benzenes to lubricate the compressor.

Suitable hydrocarbons for inclusion in the composition of the invention are those containing from 2 to 6 carbon atoms, with hydrocarbons containing from 3 to 5 carbon atoms, such as propane, butane, isobutane, pentane and isopentane, being preferred. Propane and pentane are particularly preferred hydrocarbons, with pentane being especially preferred.

The composition of the invention may also contain a fourth component (component (D)) comprising at least one hydrofluorocarbon selected from the group consisting of 1,1,1,2-tetrafluoroethane (R-134a) and 1,1,2,2-tetrafluoroethane (R-134). Although component (D) (if included) may be a mixture of R-134a and R-134, it will preferably contain just one of these compounds and more preferably will contain just R-134a.

The amounts of the various components in the composition of the invention may be varied within wide limits, but typically the composition will comprise from 10 to 70 % by weight of component (A), from 10 to 80 % by weight of component (B), from 1 to 10 % by weight of component (C) and from 0 to 60 % by weight (for example, from 1 to 60 % by weight) of component (D).

When the composition does not include the optional component (D), it will preferably comprise from 20 to 60 % by weight, more preferably from 35 to 60 % by weight, of component (A), from 20 to 60 % by weight, more preferably from 35 to 60 % by weight, of component (B) and from 1 to 7 % by weight, more preferably from 2 to 6 % by weight, of component (C). Compositions of the invention which do not contain the optional component (D) may be used as a replacement for refrigerant R-22 when component (A) is R-32 and as a replacement for refrigerant R-502 when component (A) is R-143a.

When the optional component (D) is included, compositions of the invention which comprise R-143a as component (A) and R-134a as the component (D) may be used as a replacement for refrigerant R-502 and will preferably comprise from 20 to 60 % by weight, more preferably from 35 to 60 % by weight, of R-143a, from 20 to 60 % by weight, more preferably from 35 to 60 % by weight, of R-125, from 1 to 7 % by weight, more preferably from 2 to 6 % by weight, of a hydrocarbon and from 1 to 20 % by weight, more preferably from 1 to 10 % by weight, of R-134a.

When the optional component (D) is included, compositions of the invention which comprise R-32 as component (A) and R-134a as the component (D) may be used as a replacement for refrigerant R-502 and will preferably comprise from 10 to 30 % by weight, more preferably from 10 to 25 % by weight, of R-32, from 30 to 80 % by weight, more preferably from 35 to 75 % by weight, of R-125, from 1 to 7 % by weight, more preferably from 2 to 6 % by weight, of a hydrocarbon and from 9 to 50 % by weight, more preferably from 13 to 45 % by weight, of R-134a.

When the optional component (D) is included, compositions of the invention which comprise R-32 as component (A) and R-134a as the component (D) may also be used as a replacement for refrigerant R-22 and will preferably comprise from 10 to 30 % by weight, more preferably from 15 to 30 % by weight, of R-32, from 20 to 45 % by weight, more preferably from 20 to 30 % by weight, of R-125, from 1 to 7 % by weight, more preferably from 2 to 6 % by weight, of a hydrocarbon and from 30 to 55 % by weight, more preferably from 45 to 55 % by weight, of R-134a.

The composition of the present invention may be used to provide the desired cooling in heat transfer devices such as air conditioning and low temperature refrigeration systems by a method which involves condensing the composition and thereafter evaporating it in a heat exchange relationship with a heat transfer fluid to be cooled. The composition of the invention may be employed as a replacement for refrigerant R-22 in air conditioning and low temperature refrigeration applications or as a replacement for R-502 in low temperature refrigeration applications.

The present invention is now illustrated but not limited with reference to the following examples.

### Examples 1 to 3 and Comparative Example 1

In Examples 1 to 3 three compositions of the invention comprising difluoromethane (R-32), pentafluoroethane (R-125), 1,1,1,2-tetrafluoroethane (R-134a) and n-pentane were evaluated in order to determine their performance in a refrigeration cycle of the type prevailing in an air conditioning system and to determine the ability of the n-pentane component to allow lubricants based on mineral oils to be used in combination with such compositions. In Comparative Example 1 the performance of a composition comprising difluoromethane, pentafluoroethane and 1,1,1,2-tetrafluoroethane was evaluated.

All of the compositions tested are non-azeotropic or zeotropic mixtures and, as a result, a slight compositional shift tends to arise on operation of the refrigeration or air conditioning system so that the composition which circulates around the system will not have exactly the same amounts of the constituent components as the composition which is actually charged to the system. Two mechanisms are believed to be primarily responsible for bringing about this compositional shift. The first of these is the vapour/liquid volume fraction effect, i.e. the relative volumes of vapour and liquid in both the high pressure and low pressure sides of the system expressed as a fraction. For a direct expansion system, 0.08 (8 %) of the total volume of the evaporator and 0.25 (25 %) of the total volume of the condenser will typically contain liquid refrigerant. The second mechanism is the differential solubility of the various components making up the composition in the compressor lubricant which is subject to such factors as the sump temperature, the pressure of the suction gas passing over the sump and the amount of oil in the system relative to the amount of refrigerant. These two mechanisms of compositional shift and a detailed method for calculating the precise composition of a circulating mixture which results from a particular charged mixture are documented in the article "Composition Shifts of Zeotropic Hydrofluorocarbon Refrigerants in Service" by S Corr et al in ASHRAE Transactions 1994, Volume 100, Part 2, pages 538 to 546 (reference (1)).

In each of Examples 1 to 3 and in Comparative Example 1, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 1 to 3 and Comparative Example 1 are given in Table 1.

The performance of the four circulating compositions listed in Table 1 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 2. The results for the coefficient of performance (COP) and the refrigeration capacity in Table 2 are relative to the known refrigerant chlorodifluoromethane (R-22) under the same conditions.

The performance parameters of the four compositions which are presented in Table 2, i.e. condenser pressure, evaporator pressure, discharge temperature, refrigeration capacity (by which is meant the cooling duty achieved per unit swept volume of the compressor) and coefficient of performance (COP) (by which is meant the ratio of cooling duty achieved to mechanical energy supplied to the compressor) are all art recognised parameters.

The compositions of Examples 1 to 3 were then subjected to a further evaluation in order to determine the solubility of the n-pentane component which they contain in an ISO 32 mineral oil lubricant. For each Example, the solubility (by which we mean the weight of n-pentane dissolved in the mineral oil divided by the total weight of n-pentane and mineral oil expressed as a percentage) was calculated in the standard way at the mean evaporator temperature of 0°C from the evaporator pressures given in Table 2 and the vapour/liquid equilibrium (VLE) properties of the mineral oil/n-pentane mixture. The calculated solubilities were then used to determine the viscosities (at 0°C) of the resulting mineral oil/n-pentane mixtures which result when the compositions of Examples 1 to 3 are combined with the ISO 32 mineral oil lubricant.

In the composition of Example 1, which contained 2.0 % by weight of n-pentane when charged and 1.5 % by weight of n-pentane when circulating in the system, the solubility of the n-pentane in the ISO 32 mineral oil was 6.5 % weight/weight and this generated a mineral oil/n-pentane mixture having a viscosity at 0°C of 72 Cp.

In the composition of Example 2, which contained 4.0 % by weight of n-pentane when charged and 2.7 % by weight of n-pentane when circulating in the system, the solubility of the n-pentane in the ISO 32 mineral oil was 8.4 % weight/weight and this generated a mineral oil/n-pentane mixture having a viscosity at 0°C of 53 Cp.

In the composition of Example 3, which contained 6.0 % by weight of n-pentane when charged and 3.6 % by weight of n-pentane when circulating in the system, the solubility of the n-pentane in the ISO 32 mineral oil was 9.6 % weight/weight and this generated a mineral oil/n-pentane mixture having a viscosity at 0°C of 43 Cp.

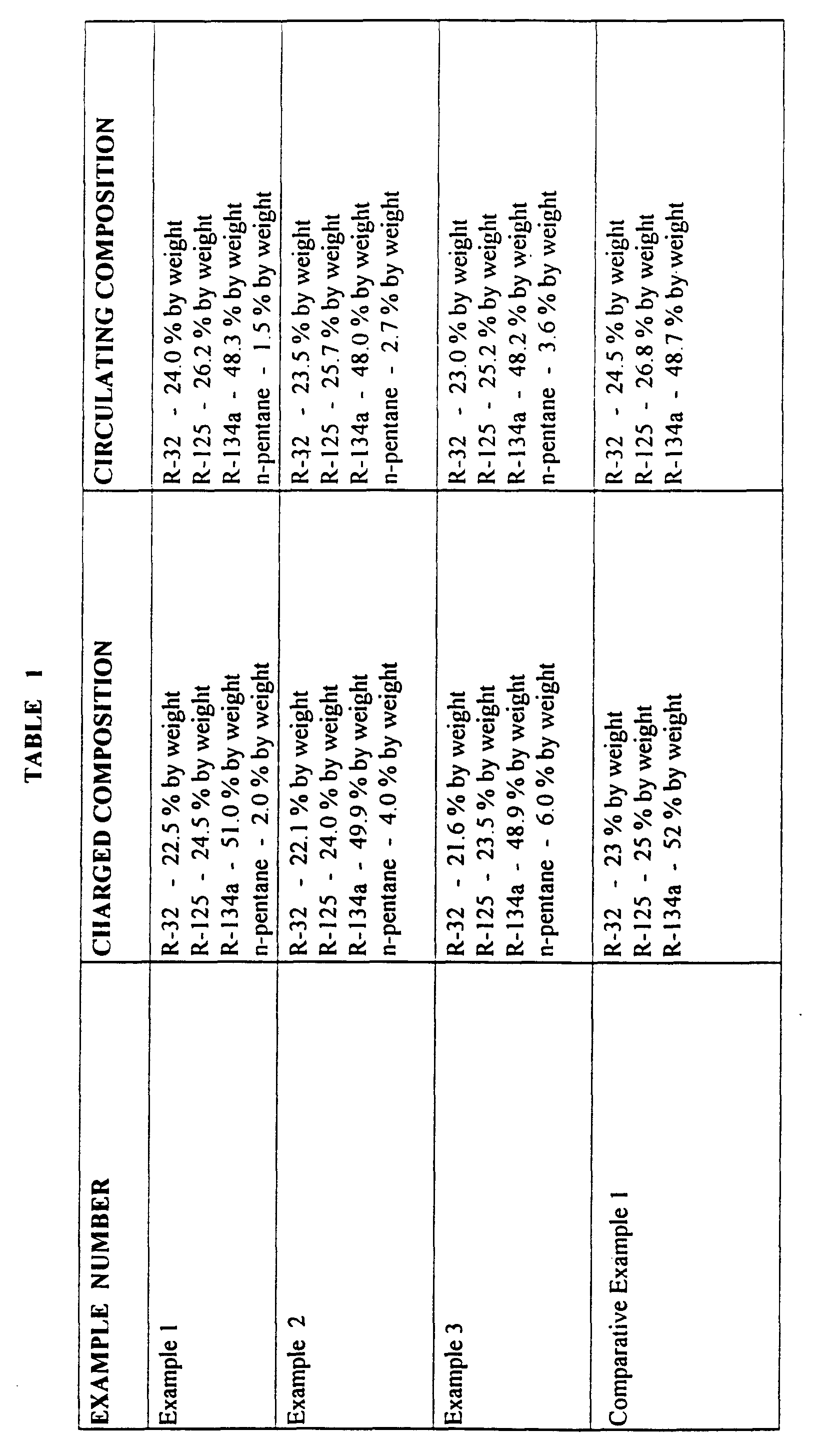

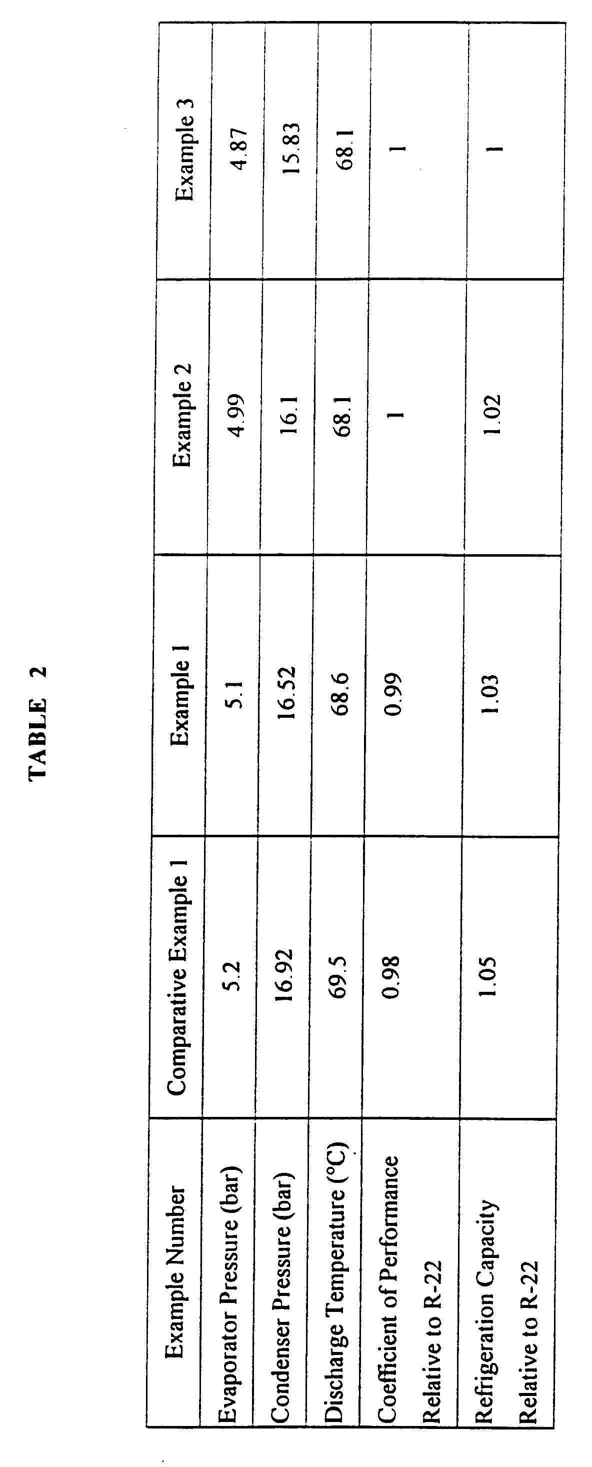

### Examples 4 to 6 and Comparative Example 2

In Examples 4 to 6 three compositions of the invention comprising difluoromethane (R-32), pentafluoroethane (R-125) and n-pentane were evaluated in order to determine their performance in a refrigeration cycle of the type prevailing in an air conditioning system and to determine the ability of the n-pentane component to allow lubricants based on mineral oils to be used in combination with such compositions. In Comparative Example 2 the performance of a composition comprising difluoromethane and pentafluoroethane was evaluated.

As before, all of the compositions tested are non-azeotropic or zeotropic mixtures so that a slight compositional shift tends to arise on operation of the refrigeration or air conditioning system. In consequence, in each of Examples 4 to 6 and in Comparative Example 2, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 4 to 6 and Comparative Example 2 are given in Table 3.

The performance of the four circulating compositions listed in Table 3 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 4. The results for the coefficient of performance (COP) and the refrigeration capacity in Table 4 are relative to the known refrigerant chlorodifluoromethane (R-22) under the same conditions.

The compositions of Examples 4 to 6 were then subjected to a further evaluation in order to determine the solubility of the n-pentane component which they contain in an ISO 32 mineral oil lubricant. For each Example, the solubility was calculated in the standard way at the mean evaporator temperature of 0°C from the evaporator pressures given in Table 4 and the vapour/liquid equilibrium (VLE) properties of the mineral oil/n-pentane mixture. The calculated solubilities were then used to determine the viscosities (at 0°C) of the resulting mineral oil/n-pentane mixtures which result when the compositions of Examples 4 to 6 are combined with the ISO 32 mineral oil lubricant.

In the composition of Example 4, which contained 2.0 % by weight of n-pentane when charged and 1.0 % by weight of n-pentane when circulating in the system, the solubility of the n-pentane in the ISO 32 mineral oil was 6.3 % weight/weight and this generated a mineral oil/n-pentane mixture having a viscosity at 0°C of 74 Cp.

In the composition of Example 5, which contained 4.0 % by weight of n-pentane when charged and 2.0 % by weight of n-pentane when circulating in the system, the solubility of the n-pentane in the ISO 32 mineral oil was 8.1 % weight/weight and this generated a mineral oil/n-pentane mixture having a viscosity at 0°C of 55 Cp.

In the composition of Example 6, which contained 6.0 % by weight of n-pentane when charged and 2.7 % by weight of n-pentane when circulating in the system, the solubility of the n-pentane in the ISO 32 mineral oil was 9.4 % weight/weight and this generated a mineral oil/n-pentane mixture having a viscosity at 0°C of 44 Cp.

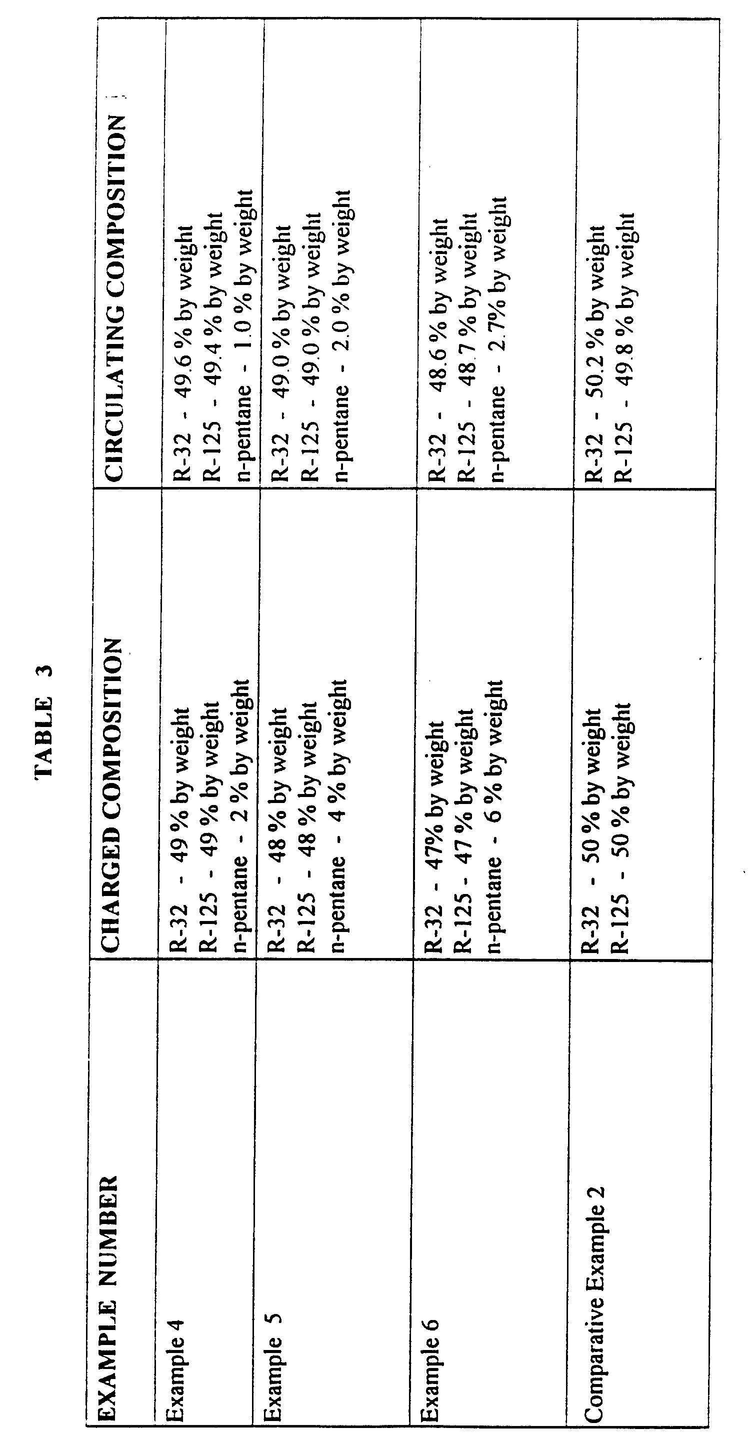

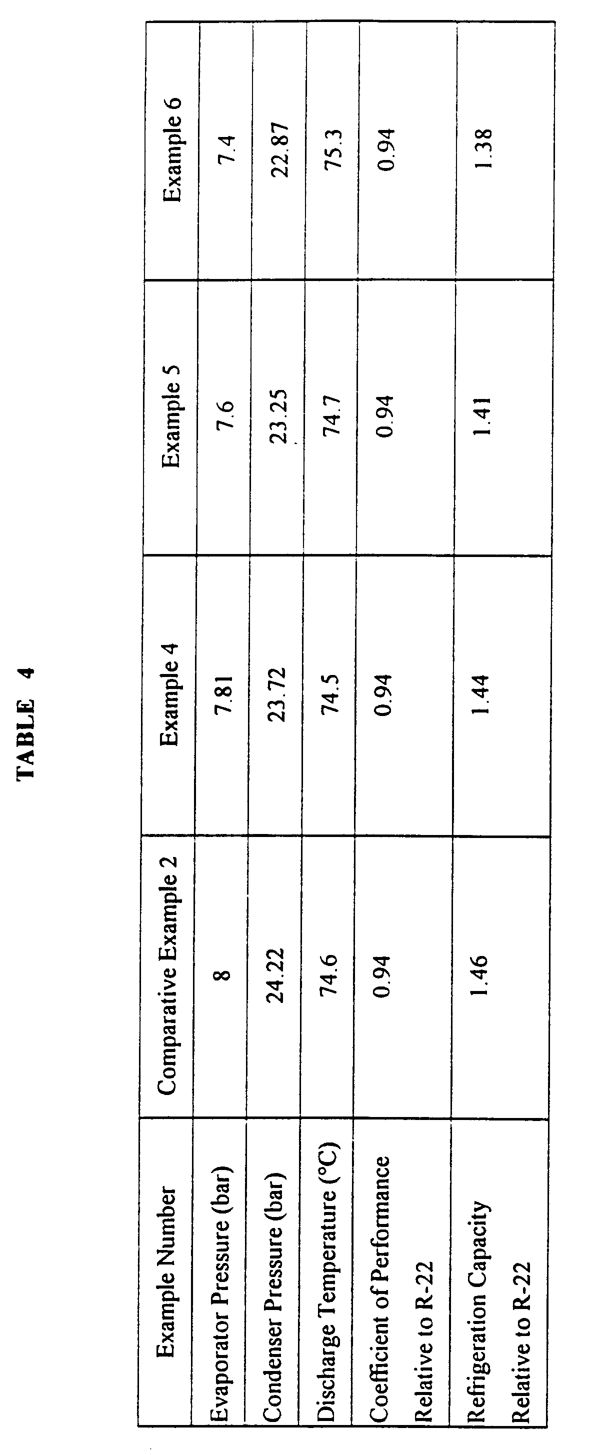

### Examples 7 to 9 and Comparative Example 3

In Examples 7 to 9 three compositions of the invention comprising pentafluoroethane (R-125), 1,1,1-trifluoroethane (R-143a), 1,1,1,2-tetrafluoroethane (R-134a) and n-pentane were evaluated in order to determine their performance in a refrigeration cycle of the type prevailing in an air conditioning system and to determine the ability of the n-pentane component to allow lubricants based on mineral oils to be used in combination with such compositions. In Comparative Example 3 the performance of a composition comprising pentafluoroethane, 1,1,1-trifluoroethane and 1,1,1,2-tetrafluoroethane was evaluated.

As before, all of the compositions tested are non-azeotropic or zeotropic mixtures so that a slight compositional shift tends to arise on operation of the refrigeration or air conditioning system. In consequence, in each of Examples 7 to 9 and in Comparative Example 3, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 7 to 9 and Comparative Example 3 are given in Table 5.

The performance of the four circulating compositions listed in Table 5 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 6. The results for the coefficient of performance (COP) and the refrigeration capacity in Table 6 are relative to the known refrigerant chlorodifluoromethane (R-22) under the same conditions.

The compositions of Examples 7 to 9 were then subjected to a further evaluation in order to determine the solubility of the n-pentane component which they contain in an ISO 32 mineral oil lubricant. For each Example, the solubility was calculated in the standard way at the mean evaporator temperature of 0°C from the evaporator pressures given in Table 6 and the vapour/liquid equilibrium (VLE) properties of the mineral oil/n-pentane mixture. The calculated solubilities were then used to determine the viscosities (at 0°C) of the resulting mineral oil/n-pentane mixtures which result when the compositions of Examples 7 to 9 are combined with the ISO 32 mineral oil lubricant.

In the composition of Example 7, which contained 2.0 % by weight of n-pentane when charged and 1.1 % by weight of n-pentane when circulating in the system, the solubility of the n-pentane in the ISO 32 mineral oil was 6.7 % weight/weight and this generated a mineral oil/n-pentane mixture having a viscosity at 0°C of 69 Cp.

In the composition of Example 8, which contained 4.0 % by weight of n-pentane when charged and 2.1 % by weight of n-pentane when circulating in the system, the solubility of the n-pentane in the ISO 32 mineral oil was 8.6 % weight/weight and this generated a mineral oil/n-pentane mixture having a viscosity at 0°C of 53 Cp.

In the composition of Example 9, which contained 6.0 % by weight of n-pentane when charged and 2.8 % by weight of n-pentane when circulating in the system, the solubility of the n-pentane in the ISO 32 mineral oil was 9.8 % weight/weight and this generated a mineral oil/n-pentane mixture having a viscosity at 0°C of 43 Cp.

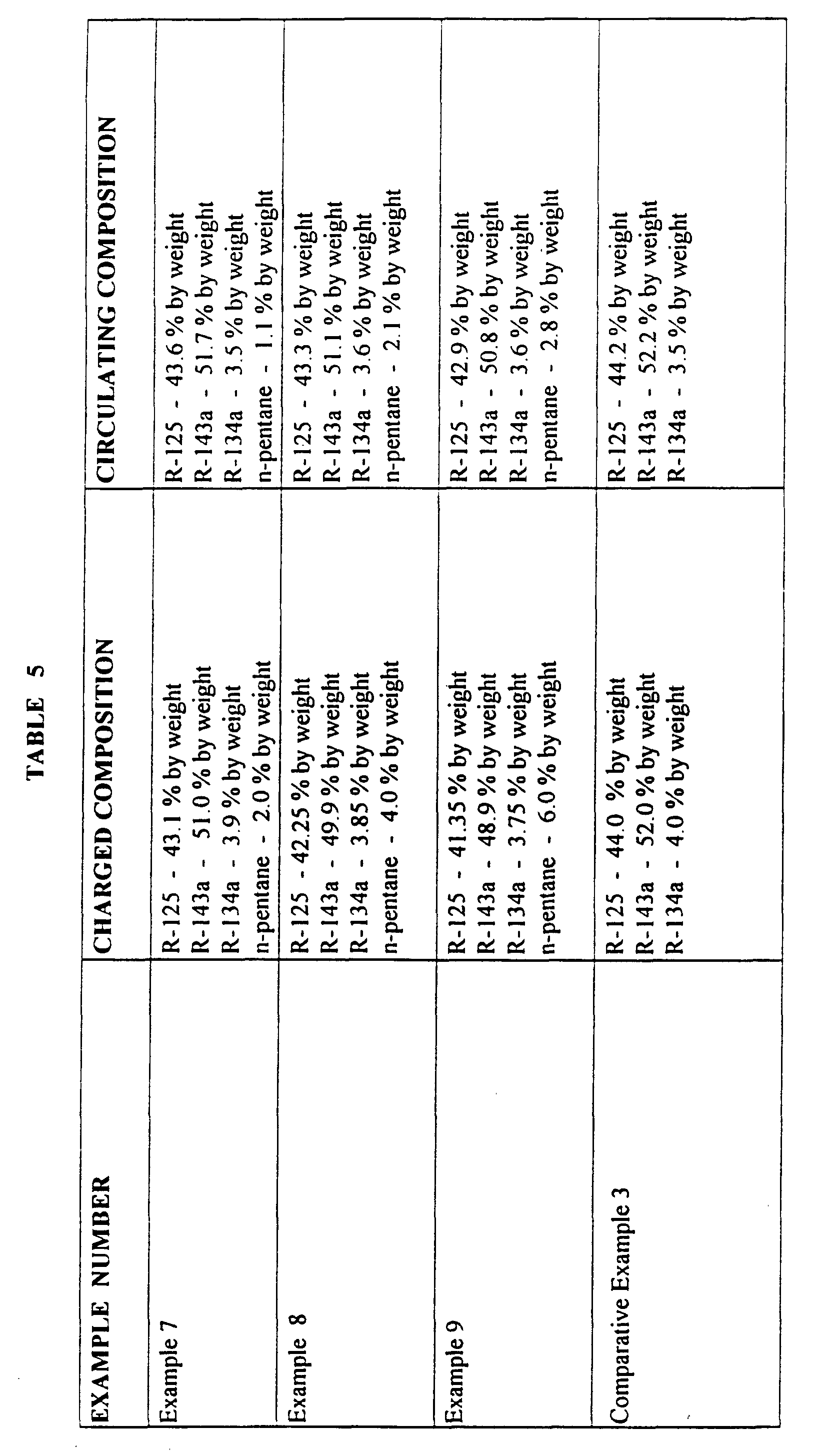

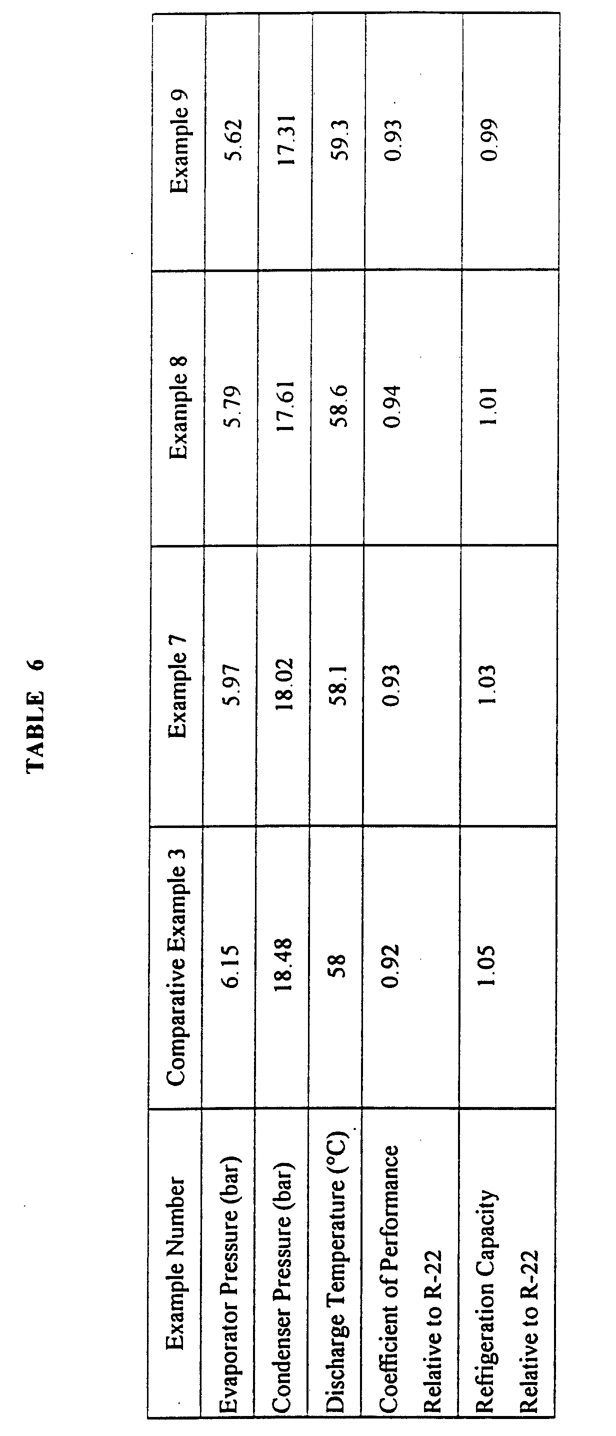

### Examples 10 to 12 and Comparative Example 4

In Examples 10 to 12 three compositions of the invention comprising pentafluoroethane (R-125), 1,1,1-trifluoroethane (R-143a) and n-pentane were evaluated in order to determine their performance in a refrigeration cycle of the type prevailing in an air conditioning system and to determine the ability of the n-pentane component to allow lubricants based on mineral oils to be used in combination with such compositions. In Comparative Example 4 the performance of a composition comprising pentafluoroethane and 1,1,1-trifluoroethane was evaluated.

As before, none of the compositions tested are true azeotropes so that a slight compositional shift tends to arise on operation of the refrigeration or air conditioning system. In consequence, in each of Examples 10 to 12 and in Comparative Example 4, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 10 to 12 and Comparative Example 4 are given in Table 7.

The performance of the four circulating compositions listed in Table 7 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 8. The results for the coefficient of performance (COP) and the refrigeration capacity in Table 8 are relative to the known refrigerant chlorodifluoromethane (R-22) under the same conditions.

The compositions of Examples 10 to 12 were then subjected to a further evaluation in order to determine the solubility of the n-pentane component which they contain in an ISO 32 mineral oil lubricant. For each Example, the solubility was calculated in the standard way at the mean evaporator temperature of 0°C from the evaporator pressures given in Table 8 and the vapour/liquid equilibrium (VLE) properties of the mineral oil/n-pentane mixture. The calculated solubilities were then used to determine the viscosities (at 0°C) of the resulting mineral oil/n-pentane mixtures which result when the compositions of Examples 10 to 12 are combined with the ISO 32 mineral oil lubricant.

In the composition of Example 10, which contained 2.0 % by weight of n-pentane when charged and 1.1 % by weight of n-pentane when circulating in the system, the solubility of the n-pentane in the ISO 32 mineral oil was 6.7 % weight/weight and this generated a mineral oil/n-pentane mixture having a viscosity at 0°C of 69 Cp.

In the composition of Example 11, which contained 4.0 % by weight of n-pentane when charged and 2.0 % by weight of n-pentane when circulating in the system, the solubility of the n-pentane in the ISO 32 mineral oil was 8.5 % weight/weight and this generated a mineral oil/n-pentane mixture having a viscosity at 0°C of 52 Cp.

In the composition of Example 12, which contained 6.0 % by weight of n-pentane when charged and 2.7 % by weight of n-pentane when circulating in the system, the solubility of the n-pentane in the ISO 32 mineral oil was 9.7 % weight/weight and this generated a mineral oil/n-pentane mixture having a viscosity at 0°C of 43 Cp.

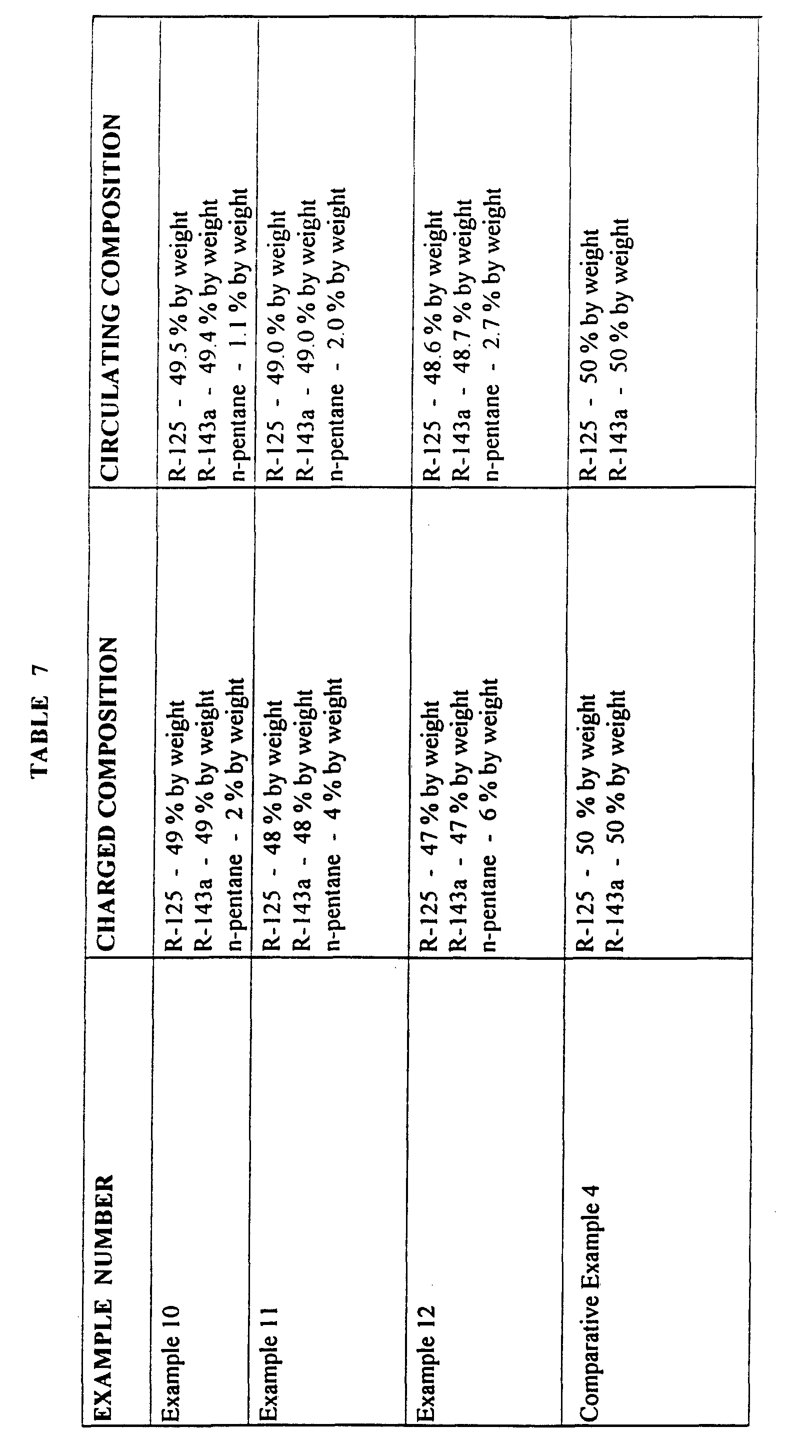

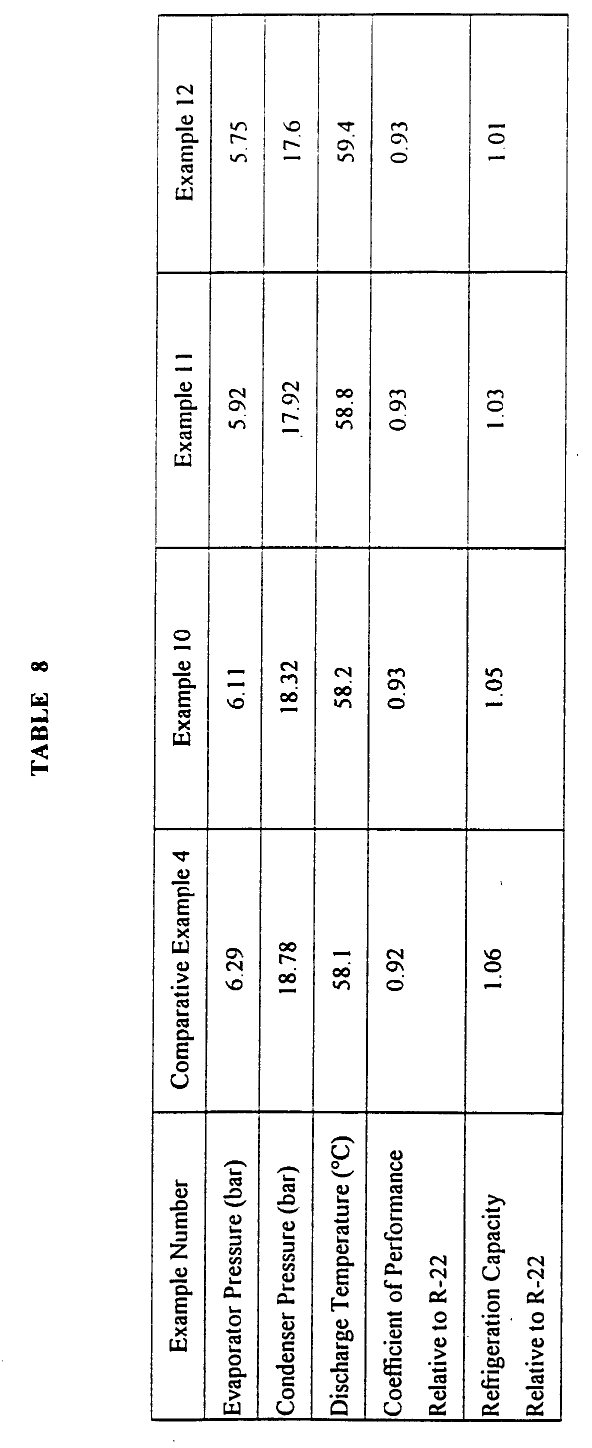

### Examples 13 to 15 and Comparative Example 5

In Examples 13 to 15 three compositions of the invention comprising difluoromethane (R-32), pentafluoroethane (R-125), 1,1,1,2-tetrafluoroethane (R-134a) and propane (R-290) were evaluated in order to determine their performance in a refrigeration cycle of the type prevailing in an air conditioning system and to determine the ability of the propane component to allow lubricants based on mineral oils to be used in combination with such compositions. In Comparative Example 5 the performance of a composition comprising difluoromethane, pentafluoroethane and 1,1,1,2-tetrafluoroethane was evaluated.

As before, all of the compositions tested are non-azeotropic or zeotropic mixtures so that a slight compositional shift tends to arise on operation of the refrigeration or air conditioning system. In consequence, in each of Examples 13 to 15 and in Comparative Example 5, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions. )
The charged composition and the circulating composition for each of Examples 13 to 15 and Comparative Example 5 are given in Table 9.

The performance of the four circulating compositions listed in Table 9 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 10. The results for the coefficient of performance (COP) and the refrigeration capacity in Table 10 are relative to the known refrigerant chlorodifluoromethane (R-22) under the same conditions.

The compositions of Examples 13 to 15 were then subjected to a further evaluation in order to determine the solubility of the propane component which they contain in an ISO 32 mineral oil lubricant. For each Example, the solubility (by which we mean the weight of propane dissolved in the mineral oil divided by the total weight of propane and mineral oil expressed as a percentage) was calculated in the standard way at the mean evaporator temperature of 0°C from the evaporator pressures given in Table 10 and the vapour/liquid equilibrium (VLE) properties of the mineral oil/propane mixture. The calculated solubilities were then used to determine the viscosities (at 0°C) of the resulting mineral oil/propane mixtures which result when the compositions of Examples 13 to 15 are combined with the ISO 32 mineral oil lubricant.

In the composition of Example 13, which contained 2.0 % by weight of propane when charged and 1.8 % by weight of propane when circulating in the system, the solubility of the propane in the ISO 32 mineral oil was 1.2 % weight/weight and this generated a mineral oil/propane mixture having a viscosity at 0°C of 188 Cp.

In the composition of Example 14, which contained 4.0 % by weight of propane when charged and 3.8 % by weight of propane when circulating in the system, the solubility of the propane in the ISO 32 mineral oil was 2.0 % weight/weight and this generated a mineral oil/propane mixture having a viscosity at 0°C of 168 Cp.

In the composition of Example 15, which contained 6.0 % by weight of propane when charged and 5.9 % by weight of propane when circulating in the system, the solubility of the propane in the ISO 32 mineral oil was 2.8 % weight/weight and this generated a mineral oil/propane mixture having a viscosity at 0°C of 140 Cp.

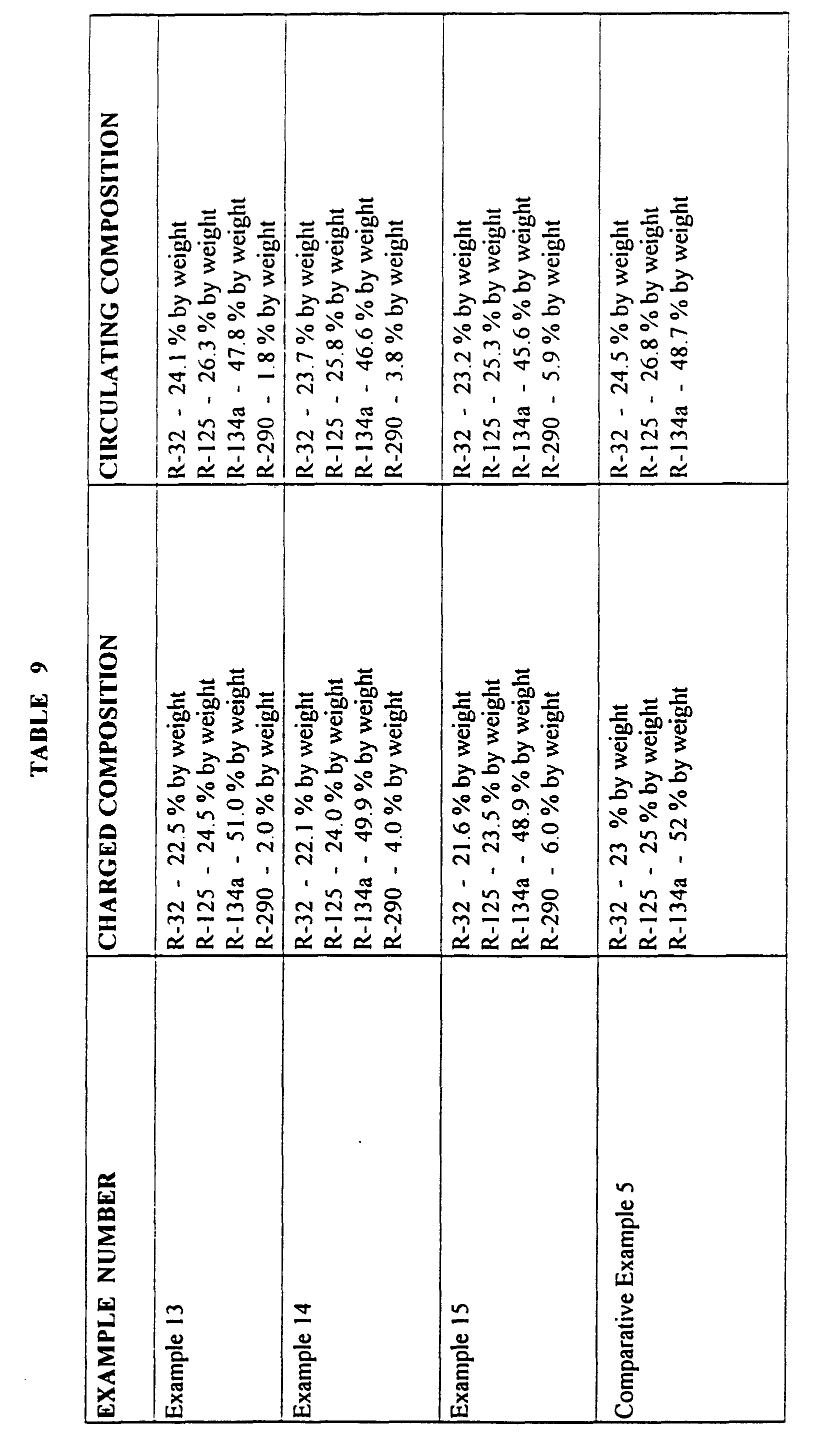

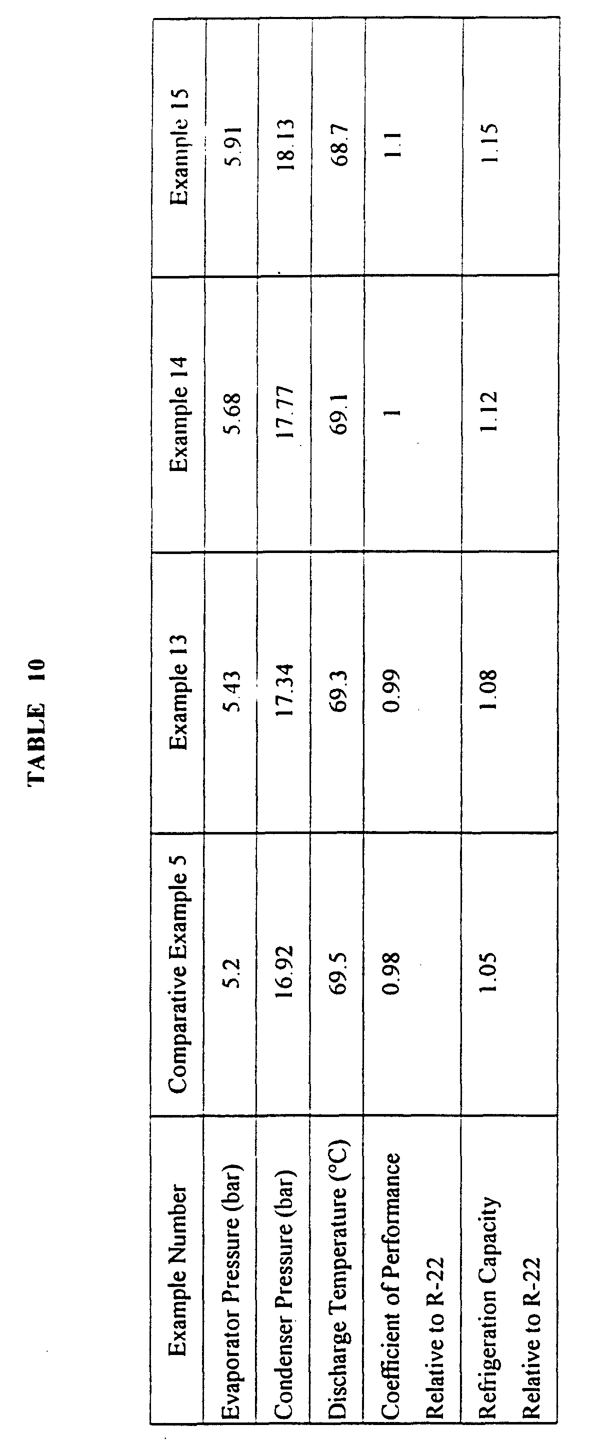

### Examples 16 to 18 and Comparative Example 6

In Examples 16 to 18 three compositions of the invention comprising difluoromethane (R-32), pentafluoroethane (R-125) and propane (R-290) were evaluated in order to determine their performance in a refrigeration cycle of the type prevailing in an air conditioning system and to determine the ability of the propane component to allow lubricants based on mineral oils to be used in combination with such compositions. In Comparative Example 6 the performance of a composition comprising difluoromethane and pentafluoroethane was evaluated.

As before, all of the compositions tested are non-azeotropic or zeotropic mixtures so that a slight compositional shift tends to arise on operation of the refrigeration or air conditioning system. In consequence, in each of Examples 16 to 18 and in Comparative Example 6, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 16 to 18 and Comparative Example 6 are given in Table 11.

The performance of the four circulating compositions listed in Table 11 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 12. The results for the coefficient of performance (COP) and the refrigeration capacity in Table 12 are relative to the known refrigerant chlorodifluoromethane (R-22) under the same conditions.

The compositions of Examples 16 to 18 were then subjected to a further evaluation in order to determine the solubility of the propane component which they contain in an ISO 32 mineral oil lubricant. For each Example, the solubility was calculated in the standard way at the mean evaporator temperature of 0°C from the evaporator pressures given in Table 12 and the vapour/liquid equilibrium (VLE) properties of the mineral oil/propane mixture. The calculated solubilities were then used to determine the viscosities (at 0°C) of the resulting mineral oil/propane mixtures which result when the compositions of Examples 16 to 18 are combined with the ISO 32 mineral oil lubricant.

In the composition of Example 16, which contained 2.0 % by weight of propane when charged and 1.8 % by weight of propane when circulating in the system, the solubility of the propane in the ISO 32 mineral oil was 1.3 % weight/weight and this generated a mineral oil/propane mixture having a viscosity at 0°C of 187 Cp.

In the composition of Example 17, which contained 4.0 % by weight of propane when charged and 3.6 % by weight of propane when circulating in the system, the solubility of the propane in the ISO 32 mineral oil was 2.3 % weight/weight and this generated a mineral oil/propane mixture having a viscosity at 0°C of 157 Cp.

In the composition of Example 18, which contained 6.0 % by weight of propane when charged and 5.6 % by weight of propane when circulating in the system, the solubility of the propane in the ISO 32 mineral oil was 3.2 % weight/weight and this generated a mineral oil/propane mixture having a viscosity at 0°C of 130 Cp.

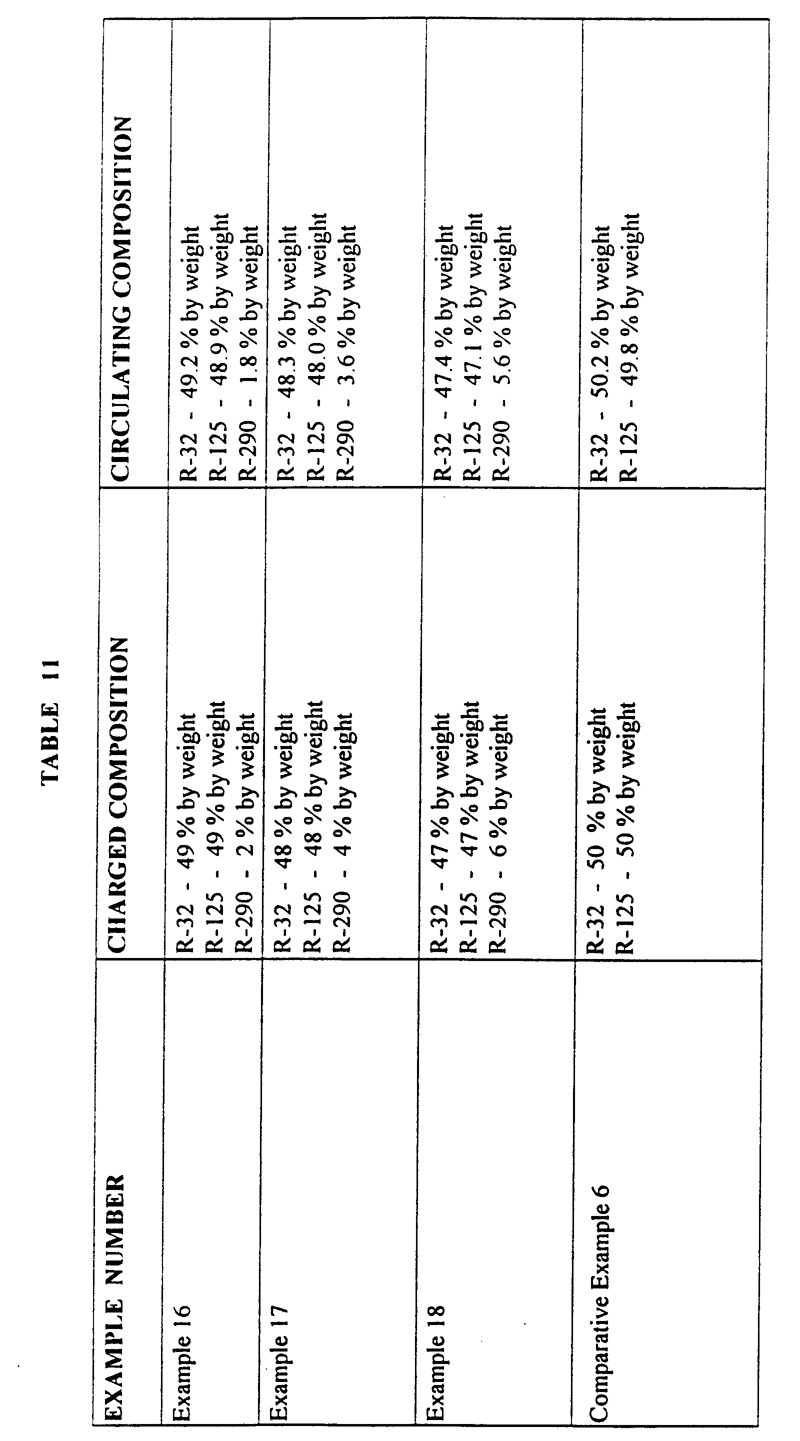

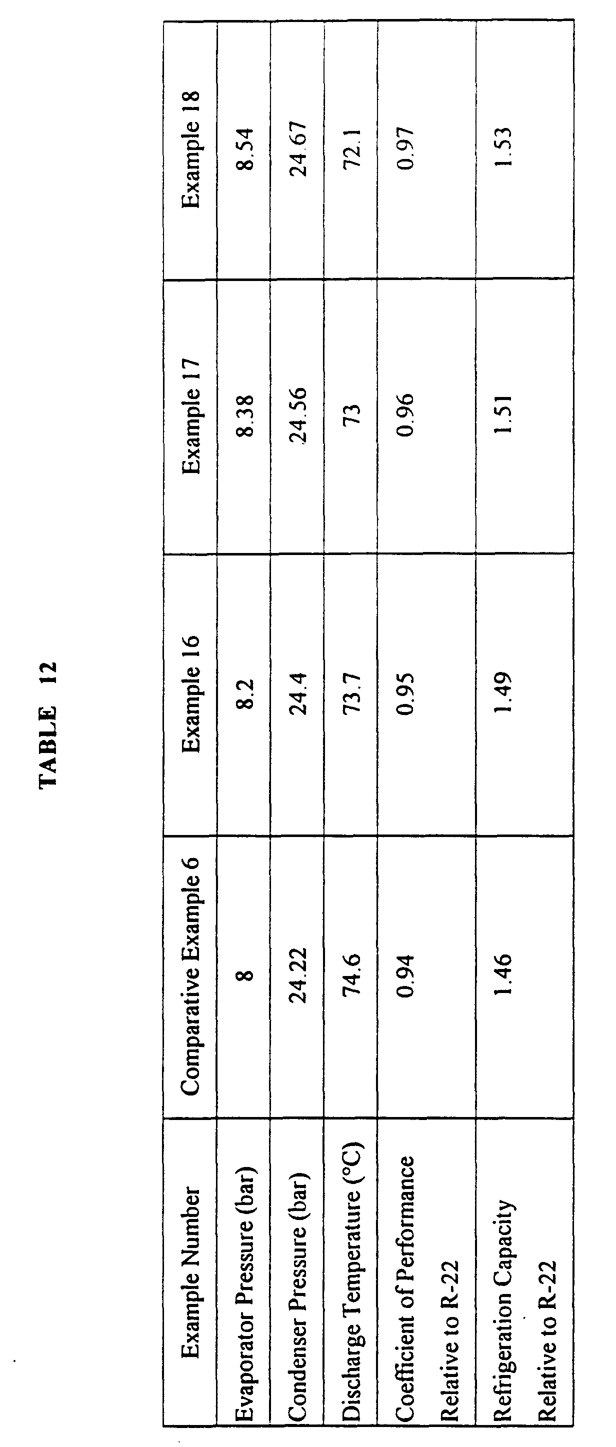

### Examples 19 to 21 and Comparative Example 7

In Examples 19 to 21 three compositions of the invention comprising pentafluoroethane (R-125), 1,1,1-trifluoroethane (R-143a), 1,1,1,2-tetrafluoroethane (R-134a) and propane (R-290) were evaluated in order to determine their performance in a refrigeration cycle of the type prevailing in an air conditioning system and to determine the ability of the propane component to allow lubricants based on mineral oils to be used in combination with such compositions. In Comparative Example 7 the performance of a composition comprising pentafluoroethane, 1,1,1-trifluoroethane and 1,1,1,2-tetrafluoroethane was evaluated.

As before, all of the compositions tested are non-azeotropic or zeotropic mixtures so that a slight compositional shift tends to arise on operation of the refrigeration or air conditioning system. In consequence, in each of Examples 19 to 21 and in Comparative Example 7, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 19 to 21 and Comparative Example 7 are given in Table 13.

The performance of the four circulating compositions listed in Table 13 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 14. The results for the coefficient of performance (COP) and the refrigeration capacity in Table 14 are relative to the known refrigerant chlorodifluoromethane (R-22) under the same conditions.

The compositions of Examples 19 to 21 were then subjected to a further evaluation in order to determine the solubility of the propane component which they contain in an ISO 32 mineral oil lubricant. For each Example, the solubility was calculated in the standard way at the mean evaporator temperature of 0°C from the evaporator pressures given in Table 14 and the vapour/liquid equilibrium (VLE) properties of the mineral oil/propane mixture. The calculated solubilities were then used to determine the viscosities (at 0°C) of the resulting mineral oil/propane mixtures which result when the compositions of Examples 19 to 21 are combined with the ISO 32 mineral oil lubricant.

In the composition of Example 19, which contained 2.0 % by weight of propane when charged and 1.7 % by weight of propane when circulating in the system, the solubility of the propane in the ISO 32 mineral oil was 1.4 % weight/weight and this generated a mineral oil/propane mixture having a viscosity at 0°C of 186 Cp.

In the composition of Example 20, which contained 4.0 % by weight of propane when charged and 3.6 % by weight of propane when circulating in the system, the solubility of the propane in the ISO 32 mineral oil was 2.3 % weight/weight and this generated a mineral oil/propane mixture having a viscosity at 0°C of 157 Cp.

In the composition of Example 21, which contained 6.0 % by weight of propane when charged and 5.5 % by weight of propane when circulating in the system, the solubility of the propane in the ISO 32 mineral oil was 3.3 % weight/weight and this generated a mineral oil/propane mixture having a viscosity at 0°C of 131 Cp.

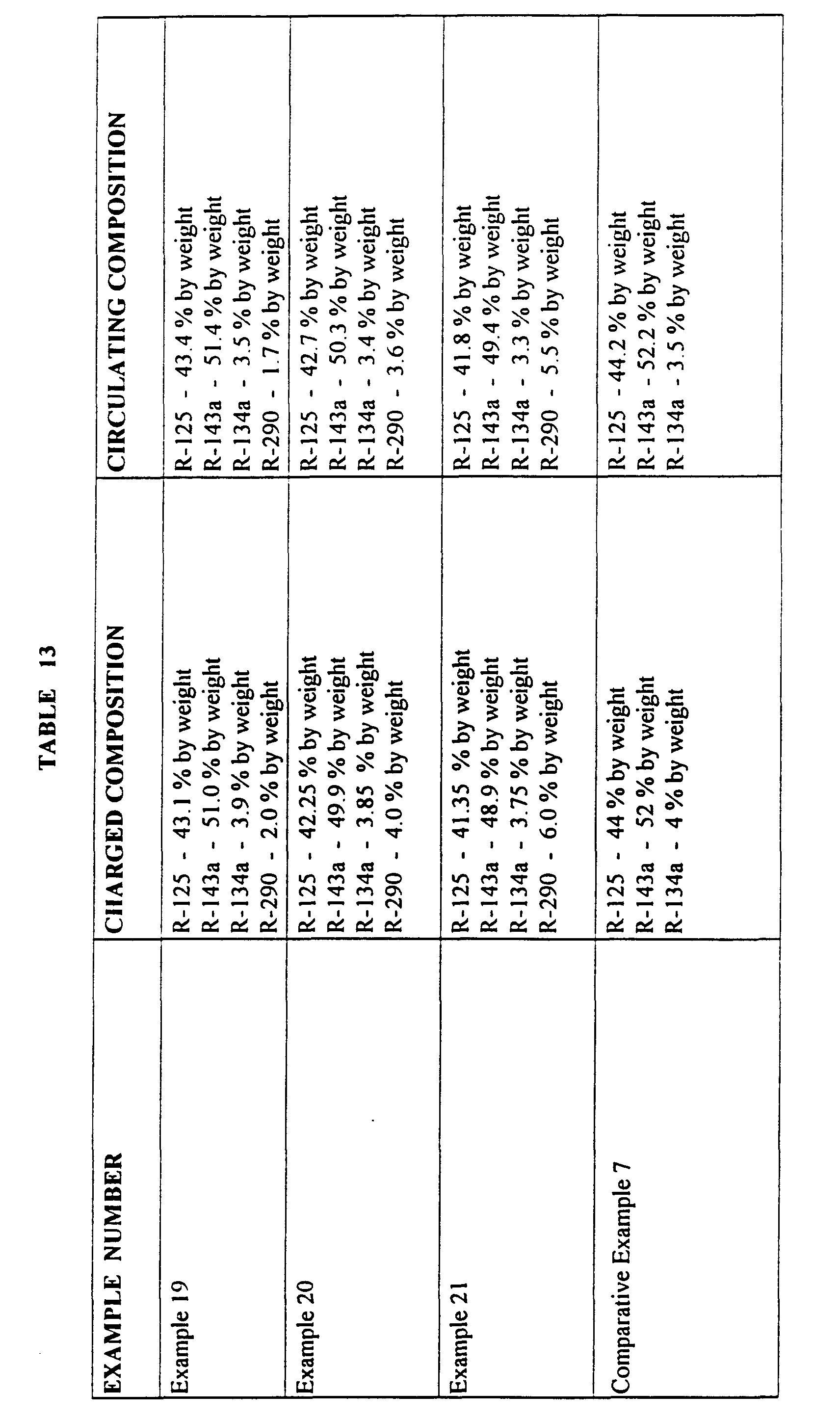

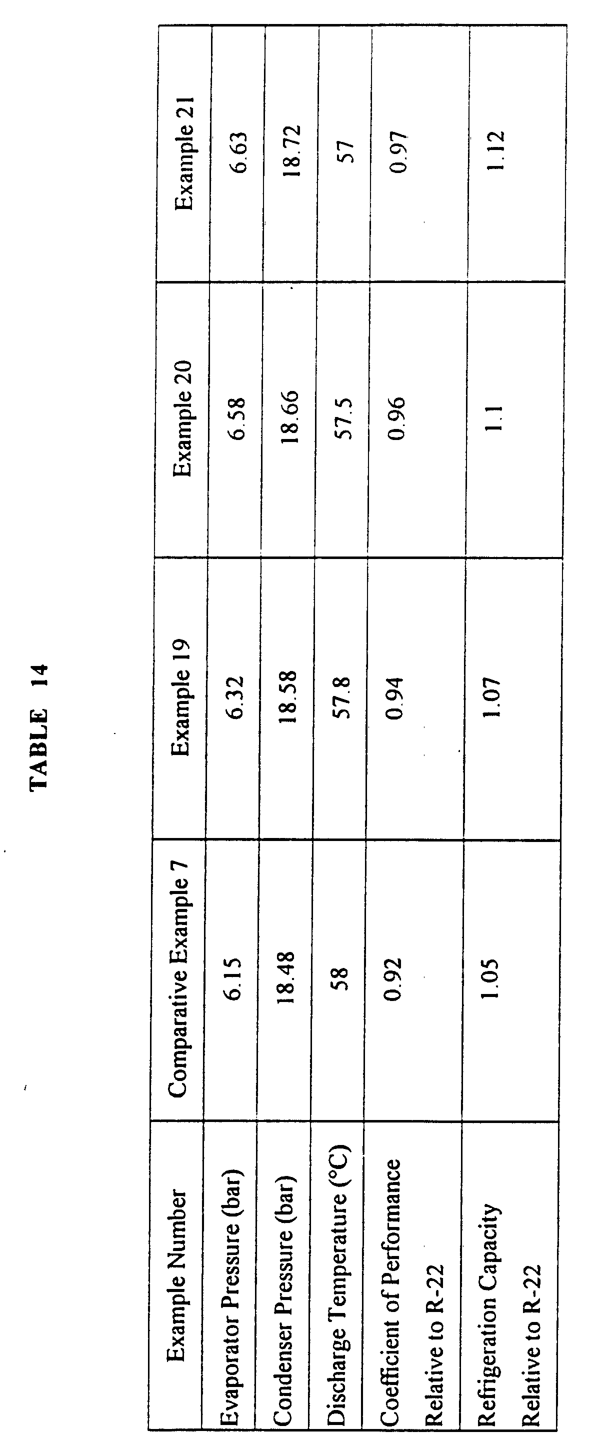

### Examples 22 to 24 and Comparative Example 8

In Examples 22 to 24 three compositions of the invention comprising pentafluoroethane (R-125), 1,1,1-trifluoroethane (R-143a) and propane (R-290) were evaluated in order to determine their performance in a refrigeration cycle of the type prevailing in an air conditioning system and to determine the ability of the propane component to allow lubricants based on mineral oils to be used in combination with such compositions. In Comparative Example 8 the performance of a composition comprising pentafluoroethane and 1,1,1-trifluoroethane was evaluated.

As before, none of the compositions tested are true azeotropes so that a slight compositional shift tends to arise on operation of the refrigerationi or air conditioning system. In consequence, in each of Examples 22 to 24 and in Comparative Example 8, the evaluation was carried out on the circulating composition which was calculated from the charged composition using the conditions given below in accordance with the method described in reference (1).

| | |
|---|---|
| Mean Evaporator Temperature | 0°C |
| Mean Condenser Temperature | 45°C |
| Liquid Volume Fraction in Evaporator | 0.08 |
| Liquid Volume Fraction in Condenser | 0.25 |
| Weight of Oil Charge/Weight of Refrigerant Charge | 0.20 |
| Oil Sump Temperature | 70°C |

(The circulating refrigerant passes over the oil sump at suction pressure which is taken to be the evaporator pressure under the above conditions.)
The charged composition and the circulating composition for each of Examples 22 to 24 and Comparative Example 8 are given in Table 15.

The performance of the four circulating compositions listed in Table 15 in a refrigeration cycle of the type prevailing in an air conditioning system was then investigated using standard refrigeration cycle analysis techniques. The following operating conditions were used in the cycle analysis.

| | |
|---|---|
| Mean Evaporator Temperature | 0°C |
| Mean Condenser Temperature | 45°C |
| Amount of Superheat | 15°C |
| Amount of Subcooling | 10°C |
| Isentropic Compressor Efficiency | 100 % |
| Cooling Duty | 1 kW |

The results of analysing the performance of the four compositions in an air conditioning cycle using these operating conditions are given in Table 16. The results for the coefficient of performance (COP) and the refrigeration capacity in Table 16 are relative to the known refrigerant chlorodifluoromethane (R-22) under the same conditions.

The compositions of Examples 22 to 24 were then subjected to a further evaluation in order to determine the solubility of the propane component which they contain in an ISO 32 mineral oil lubricant. For each Example, the solubility was calculated in the standard way at the mean evaporator temperature of 0°C from the evaporator pressures given in Table 16 and the vapour/liquid equilibrium (VLE) properties of the mineral oil/propane mixture. The calculated solubilities were then used to determine the viscosities (at 0°C) of the resulting mineral oil/propane mixtures which result when the compositions of Examples 22 to 24 are combined with the ISO 32 mineral oil lubricant.

In the composition of Example 22, which contained 2.0 % by weight of propane when charged and 1.7 % by weight of propane when circulating in the system, the solubility of the propane in the ISO 32 mineral oil was 1.4 % weight/weight and this generated a mineral oil/propane mixture having a viscosity at 0°C of 186 Cp.

In the composition of Example 23, which contained 4.0 % by weight of propane when charged and 3.6 % by weight of propane when circulating in the system, the solubility of the propane in the ISO 32 mineral oil was 2.3 % weight/weight and this generated a mineral oil/propane mixture having a viscosity at 0°C of 157 Cp.

In the composition of Example 24, which contained 6.0 % by weight of propane when charged and 5.5 % by weight of propane when circulating in the system, the solubility of the propane in the ISO 32 mineral oil was 3.2 % weight/weight and this generated a mineral oil/propane mixture having a viscosity at 0°C of 130 Cp.

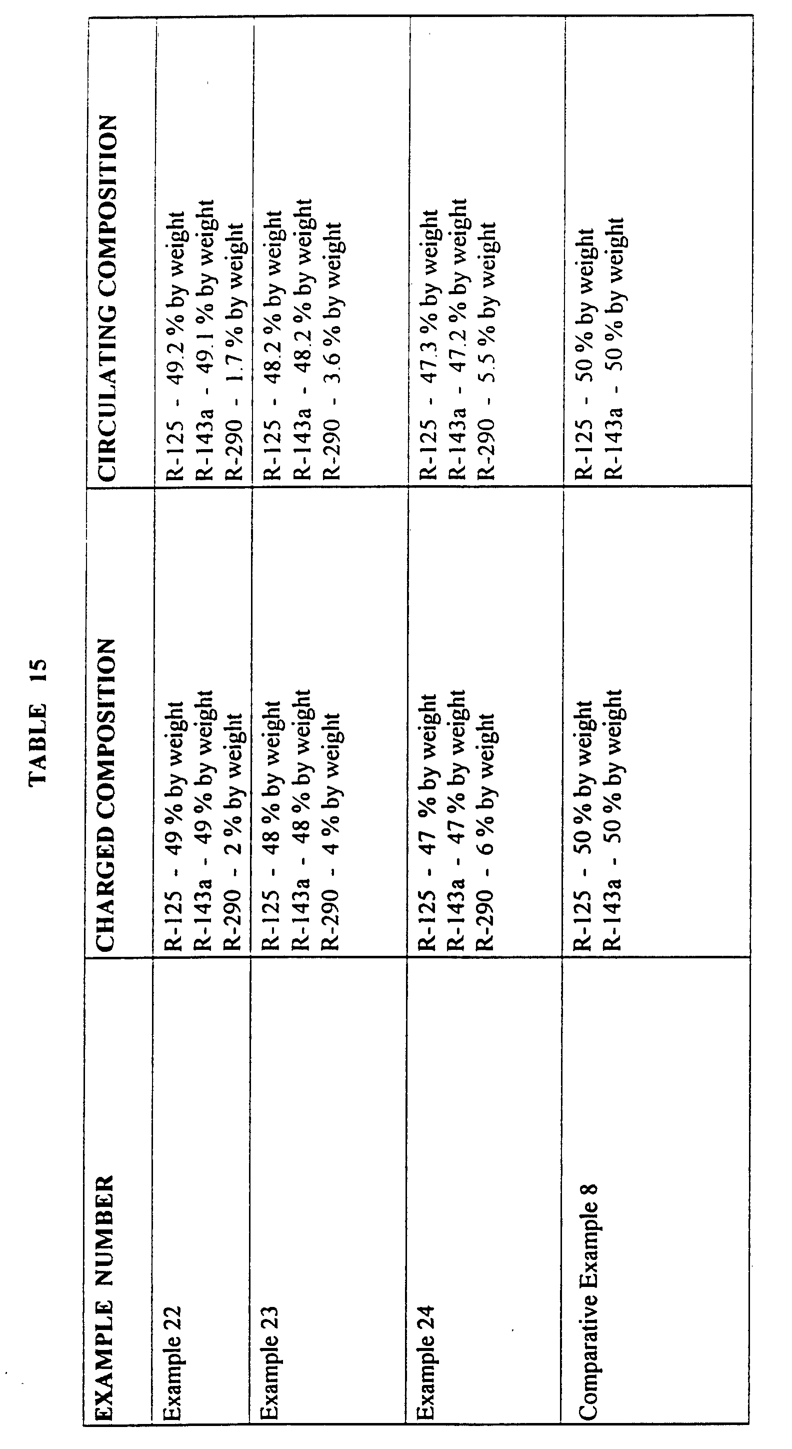

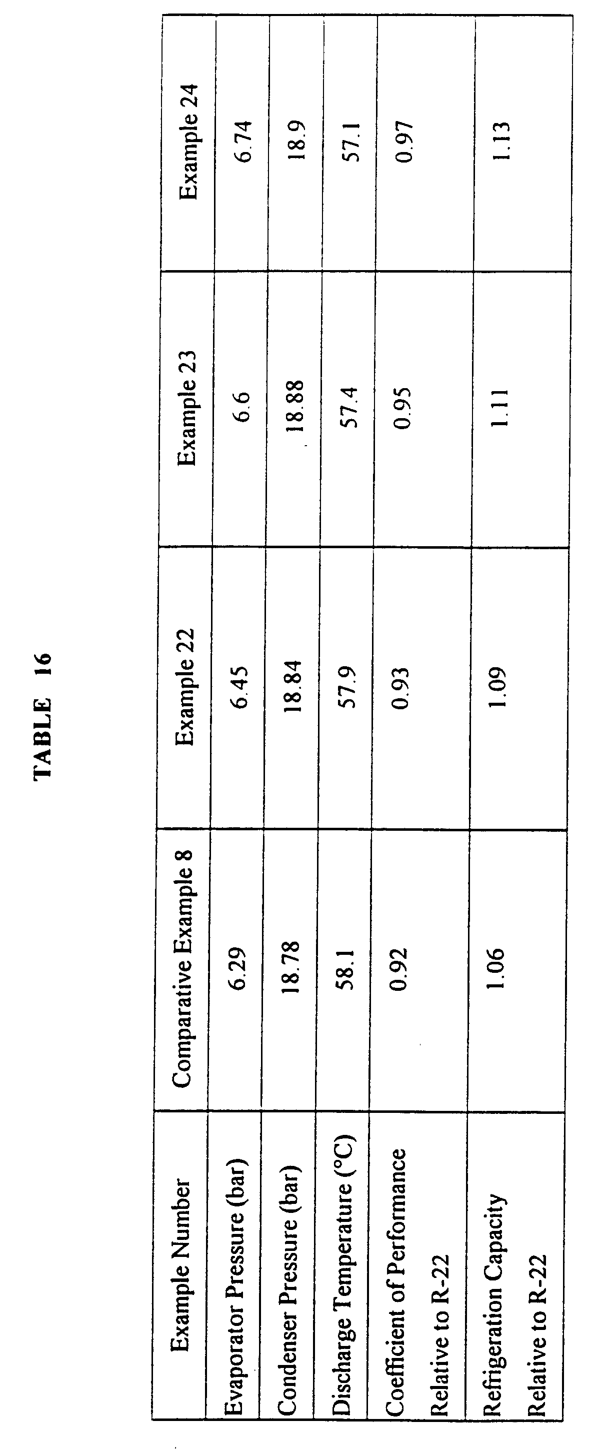

The viscosity of the ISO 32 mineral oil alone at 0°C is 300 Cp, and so it is apparent from the above Examples that both the n-pentane and propane substantially reduce the viscosity of the mineral oil. In both refrigeration and air-conditioning systems it is important that the viscosity of the lubricant in the evaporator and suction line is low enough to allow for the return of the lubricant to the compressor. Since the n-pentane contained in the compositions of Examples 1 to 12 and the propane contained in the compositions of Examples 13 to 24 reduce the viscosity of the mineral oil lubricant at the kind of temperatures that typically prevail in an evaporator and suction line, this should facilitate the return of that lubricant to the compressor and may allow such lubricants to be used in combination with the compositions of the invention.

## Claims (Claims for the following Contracting State(s): AT, BE, CH, DK, ES, GR, IE, LU, MC, NL, PT, SE)

1. A composition consisting essentially of:
(A) at least one hydrofluorocarbon selected from difluoromethane and 1,1,1-trifluoroethane;
(B) pentafluoroethane; and
(C) pentane.

2. A composition as claimed in claim 1 wherein component (A) is difluoromethane.

3. A composition as claimed in claim 1 wherein component (A) is 1,1,1-trifluoroethane.

4. A composition as claimed in any one of claims 1 to 3 which comprises from 10 to 70 % by weight of component (A), from 10 to 80 % by weight of component (B) and from 1 to 10 % by weight of component (C).

5. A composition as claimed in claim 4 which comprises from 20 to 60 % by weight of component (A), from 20 to 60 % by weight of component (B) and from 1 to 7 % by weight of component (C).

6. A composition as claimed in claim 5 which comprises from 35 to 60 % by weight of component (A), from 35 to 60 % by weight of component (B) and from 2 to 6 % by weight of component (C).

7. A composition comprising:
(A) at least one hydrofluorocarbon selected from difluoromethane and 1,1,1-trifluoroethane;
(B) pentafluoroethane;
(C) at least one hydrocarbon having from 2 to 6 carbon atoms; and
(D) 1,1,1,2-tetrafluoroethane
providing that when component (A) is difluoromethane then component (C) is pentane.

8. A composition as claimed in claim 7 wherein component (A) is difluoromethane.

9. A composition as claimed in claim 7 wherein component (A) is 1,1,1-trifluoroethane.

10. A composition as claimed in claim 9 wherein component (C) is at least one hydrocarbon selected from propane and pentane.

11. A composition as claimed in any one of claims 7 to 10 which comprises from 10 to 70 % by weight of component (A), from 10 to 80 % by weight of component (B), from 1 to 10 % by weight of component (C) and from 1 to 60 % by weight of component (D).

12. A composition comprising from 10 to 30 % by weight of difluoromethane, from 30 to 80 % by weight of pentafluoroethane, from 1 to 7 % by weight of propane and from 9 to 50 % by weight of 1,1,1,2-tetrafluoroethane.

13. A composition as claimed in claim 12 which comprises from 10 to 25 % by weight of difluoromethane, from 35 to 75 % by weight of pentafluoroethane, from 2 to 6 % by weight of propane and from 13 to 45 % by weight of 1,1,1,2-tetrafluoroethane.

14. A composition comprising from 10 to 30 % by weight of difluoromethane, from 20 to 45 % by weight of pentafluoroethane, from I to 7 % by weight of propane and from 30 to 55 % by weight of 1,1,1,2-tetrafluoroethane.

15. A composition as claimed in claim 14 which comprises from 15 to 30 % by weight of difluoromethane, from 20 to 30 % by weight of pentafluoroethane, from 2 to 6 % by weight of propane and from 45 to 55 % by weight of 1,1,1,2-tetrafluoroethane.

16. A composition as claimed in claim 9 which comprises from 20 to 60 % by weight of 1,1,1-trifluoroethane, from 20 to 60 % by weight of pentafluoroethane, from 1 to 7 % by weight of the hydrocarbon(s) and from 1 to 20 % by weight of 1,1,1,2-tetrafluoroethane.

17. A composition as claimed in claim 16 which comprises from 35 to 60 % by weight of 1,1,1-trifluoroethane, from 35 to 60 % by weight of pentafluoroethane, from 2 to 6 % by weight of the hydrocarbon(s) and from 1 to 10 % by weight of 1,1,1,2-tetrafluoroethane.

18. A refrigeration or air conditioning system containing a refrigerant composition as claimed in any one of claims 1 to 17.

19. The use in a refrigeration or air conditioning system of a refrigerant composition as claimed in any one of claims 1 to 17.

20. A method for providing cooling which comprises condensing a refrigerant composition as claimed in any one of claims 1 to 17 and thereafter evaporating it in a heat exchange relationship with a fluid to be cooled.

## Claims (Claims for the following Contracting State(s): DE, FR, GB, IT)

1. A composition consisting essentially of:
(A) at least one hydrofluorocarbon selected from difluoromethane and 1,1,1-trifluoroethane;
(B) pentafluoroethane; and
(C) pentane.

2. A composition as claimed in claim 1 wherein component (A) is difluoromethane.

3. A composition as claimed in claim 1 wherein component (A) is 1,1,1-trifluoroethane.

4. A composition as claimed in any one of claims 1 to 3 which comprises from 10 to 70 % by weight of component (A), from 10 to 80 % by weight of component (B) and from 1 to 10 % by weight of component (C).

5. A composition as claimed in claim 4 which comprises from 20 to 60 % by weight of component (A), from 20 to 60 % by weight of component (B) and from 1 to 7 % by weight of component (C).

6. A composition as claimed in claim 5 which comprises from 35 to 60 % by weight of component (A), from 35 to 60 % by weight of component (B) and from 2 to 6 % by weight of component (C).

7. A composition comprising:
(A) at least one hydrofluorocarbon selected from difluoromethane and 1,1,1-trifluoroethane;
(B) pentafluoroethane;
(C) at least one hydrocarbon having from 2 to 6 carbon atoms; and
(D) 1,1,1,2-tetrafluoroethane providing that when component (A) is difluoromethane the composition is one comprising from 10 to 30 % by weight of difluoromethane, from 30 to 80 % by weight of pentafluoroethane, from 1 to 7 % by weight of propane and from 9 to 50 % by weight of 1,1,1,2-tetrafluoroethane or one comprising from 10 to 30 % by weight of difluoromethane, from 20 to 45 % by weight of pentafluoroethane, from 1 to 7 % by weight of propane and from 30 to 55 % by weight of 1,1,1,2-tetrafluoroethane.

8. A composition as claimed in claim 7 wherein component (A) is 1,1,1-trifluoroethane.

9. A composition as claimed in claim 8 wherein component (C) is at least one hydrocarbon selected from propane and pentane.

10. A composition as claimed in claim 8 or claim 9 which comprises from 10 to 70 % by weight of component (A), from 10 to 80 % by weight of component (B), from 1 to 10 % by weight of component (C) and from 1 to 60 % by weight of component (D).

11. A composition as claimed in claim 7 wherein component (A) is difluoromethane and the composition comprises from 10 to 25 % by weight of difluoromethane, from 35 to 75 % by weight of pentafluoroethane, from 2 to 6 % by weight of propane and from 13 to 45 % by weight of 1,1,1,2-tetrafluoroethane.

12. A composition as claimed in claim 7 wherein component (A) is difluoromethane and the composition comprises from 15 to 30 % by weight of difluoromethane, from 20 to 30 % by weight of pentafluoroethane, from 2 to 6 % by weight of propane and from 45 to 55 % by weight of 1,1,1,2-tetrafluoroethane.

13. A composition as claimed in claim 8 or claim 9 which comprises from 20 to 60 % by weight of 1,1,1-trifluoroethane, from 20 to 60 % by weight of pentafluoroethane, from 1 to 7 % by weight of the hydrocarbon(s) and from 1 to 20 % by weight of 1,1,1,2-tetrafluoroethane.

14. A composition as claimed in claim 13 which comprises from 35 to 60 % by weight of 1,1,1-trifluoroethane, from 35 to 60 % by weight of pentafluoroethane, from 2 to 6 % by weight of the hydrocarbon(s) and from 1 to 10 % by weight of 1,1,1,2-tetrafluoroethane.

15. A refrigeration or air conditioning system containing a refrigerant composition as claimed in any one of claims 1 to 14.

16. The use in a refrigeration or air conditioning system of a refrigerant composition as claimed in any one of claims 1 to 14.

17. A method for providing cooling which comprises condensing a refrigerant composition as claimed in any one of claims 1 to 14 and thereafter evaporating it in a heat exchange relationship with a fluid to be cooled.

## Patentansprüche (Patentansprüche für folgende(n) Vertragsstaat(en): AT, BE, CH, DK, ES, GR, IE, LU, MC, NL, PT, SE)

1. Zusammensetzung, die im wesentlichen besteht aus:
(A) wenigstens einem Fluorkohlenwasserstoff, der ausgewählt ist aus Difluormethan und 1,1,1-Trifluorethan;
(B) Pentafluorethan; und
(C) Pentan.

2. Zusammensetzung nach Anspruch 1, bei der Komponente (A) Difluormethan ist.

3. Zusammensetzung nach Anspruch 1, bei der Komponente (A) 1,1,1-Trifluorethan ist.

4. Zusammensetzung nach irgendeinem der Ansprüche 1 bis 3, die von 10 bis 70 Gew.-% der Komponente (A), von 10 bis 80 Gew.-% der Komponente (B) und von 1 bis 10 Gew.-% der Komponente (C) umfaßt.

5. Zusammensetzung nach Anspruch 4, die von 20 bis 60 Gew.-% der Komponente (A), von 20 bis 60 Gew.-% der Komponente (B) und von 1 bis 7 Gew.-% der Komponente (C) umfaßt.

6. Zusammensetzung nach Anspruch 5, die von 35 bis 60 Gew.-% von Komponente (A), von 35 bis 60 Gew.-% der Komponente (B) und von 2 bis 6 Gew.-% der Komponente (C) umfaßt.

7. Zusammensetzung, die umfaßt:
(A) wenigstens einen Fluorkohlenwasserstoff, der ausgewählt ist aus Difluormethan und 1,1,1-Trifluorethan;
(B) Pentafluorethan,
(C) wenigstens einen Kohlenwasserstoff mit von 2 bis 6 Kohlenstoffatomen; und
(D) 1,1,1,2-Tetrafluorethan,
mit der Maßgabe, daß dann, wenn Komponente (A) Difluormethan ist, die Komponente (C) Pentan ist.

8. Zusammensetzung nach Anspruch 7, in der Komponente (A) Difluormethan ist.

9. Zusammensetzung nach Anspruch 7, bei der Komponente (A) 1,1,1-Trifluorethan ist.

10. Zusammensetzung nach Anspruch 9, bei der Komponente (C) wenigstens ein Kohlenwasserstoff ist, der ausgewählt ist aus Propan und Pentan.

11. Zusammensetzung nach irgendeinem der Ansprüche 7 bis 10, die von 10 bis 70 Gew.-% der Komponente (A), von 10 bis 80 Gew.-% der Komponente (B), von 1 bis 10 Gew.-% der Komponente (C) und von 1 bis 60 Gew.-% der Komponente (D) umfaßt.

12. Zusammensetzung, die von 10 bis 30 Gew.-% der Difluormethan, von 30 bis 80 Gew.-% von Pentafluorethan, von 1 bis 7 Gew.-% Propan und von 9 bis 50 Gew.-% der 1,1,1,2-Tetrafluorethan umfaßt.

13. Zusammensetzung nach Anspruch 12, die von 10 bis 25 Gew.-% Difluormethan, von 35 bis 75 Gew.-% Pentafluorethan, von 2 bis 6 Gew.-% Propan und von 13 bis 45 Gew.-% 1,1,1,2-Tetrafluorethan umfaßt.

14. Zusammensetzung, die von 10 bis 30 Gew.-% Difluormethan, von 20 bis 45 Gew.-% Pentafluorethan, von 1 bis 7 Gew.-% Propan und von 30 bis 55 Gew.-% 1,1,1-Tetrafluorethan umfaßt.

15. Zusammensetzung nach Anspruch 14, die von 15 bis 30 Gew.-% Difluormethan, von 20 bis 30 Gew.-% Pentafluorethan, von 2 bis 6 Gew.-% Propan und von 45 bis 55 Gew.-% 1,1,1,2-Tetrafluorethan umfaßt.

16. Zusammensetzung nach Anspruch 9, die von 20 bis 60 Gew.-% von 1,1,1-Trifluorethan, von 20 bis 60 Gew.-% Pentafluorethan, von 1 bis 7 Gew.-% Kohlenwasserstoff(e) und von 1 bis 20 Gew.-% 1,1,1,2-Tetrafluorethan umfaßt.

17. Zusammensetzung nach Anspruch 16, die von 35 bis 60 Gew.-% 1,1,1-Trifluorethan, von 35 bis 60 Gew.-% Pentafluorethan, von 2 bis 6 Gew.-% Kohlenwasserstoff(e) und von 1 bis 10 Gew.-% 1,1,1,2-Tetrafluorethan umfaßt.

18. Kälte - oder Airconditioning-System, das eine Kältemittelzusammensetzung enthält, wie sie in irgendeinem der Ansprüche 1 bis 17 beansprucht wird.

19. Verwendung einer Kältemittelzusammensetzung, wie sie in irgendeinem der Ansprüche 1 bis 17 beansprucht wird, in einem Kälte- oder Airconditioning-System.

20. Verfahren zur Erzeugung einer Kühlung, das das Kondensieren einer Kältemittelzusammensetzung, wie sie in irgendeinem der Ansprüche 1 bis 17 beansprucht wird, und danach deren Verdampfung in einer Wärmeaustauschbeziehung mit einem Fluid, das gekühlt werden soll, umfaßt.

## Patentansprüche (Patentansprüche für folgende(n) Vertragsstaat(en): DE, FR, GB, IT)

1. Zusammensetzung, die im wesentlichen besteht aus:
(A) wenigstens einem Fluorkohlenwasserstoff, der ausgewählt ist aus Difluormethan und 1,1,1-Trifluorethan;
(B) Pentafluorethan; und
(C) Pentan.

2. Zusammensetzung nach Anspruch 1, bei der Komponente (A) Difluormethan ist.

3. Zusammensetzung nach Anspruch 1, bei der Komponente (A) 1,1,1-Trifluorethan ist.

4. Zusammensetzung nach irgendeinem der Ansprüche 1 bis 3, die von 10 bis 70 Gew.-% der Komponente (A), von 10 bis 80 Gew.-% der Komponente (B) und von 1 bis 10 Gew.-% der Komponente (C) umfaßt.

5. Zusammensetzung nach Anspruch 4, die von 20 bis 60 Gew.-% der Komponente (A), von 20 bis 60 Gew.-% der Komponente (B) und von 1 bis 7 Gew.-% der Komponente (C) umfaßt.

6. Zusammensetzung nach Anspruch 5, die von 35 bis 60 Gew.-% von Komponente (A), von 35 bis 60 Gew.-% der Komponente (B) und von 2 bis 6 Gew.-% der Komponente (C) umfaßt.

7. Zusammensetzung, die umfaßt:
(A) wenigstens einen Fluorkohlenwasserstoff, der ausgewählt ist aus Difluormethan und 1,1,1-Trifluorethan;
(B) Pentafluorethan,
(C) wenigstens einen Kohlenwasserstoff mit von 2 bis 6 Kohlenstoffatomen; und
(D) 1,1,1,2-Tetrafluorethan,
mit der Maßgabe, daß dann, wenn Komponente (A) Difluormethan ist, die Zusammensetzung eine solche ist, die von 10 bis 30 Gew.-% Difluormethan, von 30 bis 80 Gew.-% Pentafluorethan, von 1 bis 7 Gew.-% Propan und von 9 bis 50 Gew.-% 1,1,1,2-Tetrafluorethan aufweist oder eine, die von 10 bis 30 Gew.-% Difluormethan, von 20 bis 45 Gew.-% Pentafluorethan, von 1 bis 7 Gew.-% Propan und von 30 bis 55 Gew.-% 1,1,1,2-Tetrafluorethan umfaßt.

8. Zusammensetzung nach Anspruch 7, bei der Komponente (A) 1,1,1-Trifluorethan ist.

9. Zusammensetzung nach Anspruch 8, bei der Komponente (C) wenigstens ein Kohlenwasserstoff ist, der ausgewählt ist aus Propan und Pentan.

10. Zusammensetzung nach Anspruch 8 oder Anspruch 9, die von 10 bis 70 Gew.-% von Komponente (A), von 10 bis 80 Gew.-% von Komponente (B), von 1 bis 10 Gew.-% von Komponente (C) und von 1 bis 60 Gew.-% von Komponente (D) umfaßt.

11. Zusammensetzung nach Anspruch 7, in der Komponente (A) Difluormethan ist und die Zusammensetzung von 10 bis 25 Gew.-% Difluormethan, von 35 bis 75 Gew.-% Pentafluorethan, von 2 bis 6 Gew.-% Propan und von 13 bis 45 Gew.-% 1,1,1,2-Tetrafluorethan umfaßt.

12. Zusammensetzung nach Anspruch 7, bei der Komponente (A) Difluormethan ist und die Zusammensetzung von 15 bis 30 Gew.-% Difluormethan, von 20 bis 30 Gew.-% Pentafluorethan, von 2 bis 6 Gew.-% Propan und von 45 bis 55 Gew.-% 1,1,1,2-Tetrafluorethan umfaßt.

13. Zusammensetzung nach Anspruch 8 oder Anspruch 9, die von 20 bis 60 Gew.-% 1,1,1-Trifluorethan, von 20 bis 60 Gew.-% Pentafluorethan, von 1 bis 7 Gew.-% Kohlenwasserstoff(e) und von 1 bis 20 Gew.-% 1,1,1,2-Tetrafluorethan umfaßt.

14. Zusammensetzung nach Anspruch 13, die von 35 bis 60 Gew.-% 1,1,1-Trifluorethan, von 35 bis 60 Gew.-% Pentafluorethan, von 2 bis 6 Gew.-% Kohlenwasserstoff(e) und von 1 bis 10 Gew.-% 1,1,1,2-Tetrafluorethan umfaßt.

15. Kälte - oder Airconditioning-System, das eine Kältemittelzusammensetzung enthält, wie sie in irgendeinem der Ansprüche 1 bis 14 beansprucht wird.

16. Verwendung einer Kältemittelzusammensetzung, wie sie in irgendeinem der Ansprüche 1 bis 14 beansprucht wird, in einem Kälte- oder Airconditioning-System.

17. Verfahren zur Erzeugung einer Kühlung, das das Kondensieren einer Kältemittelzusammensetzung, wie sie in irgendeinem der Ansprüche 1 bis 14 beansprucht wird, und danach deren Verdampfung in einer Wärmeaustauschbeziehung mit einem Fluid, das gekühlt werden soll, umfaßt.

## Revendications (Revendications pour l'(les) Etat(s) contractant(s) suivant(s): AT, BE, CH, DK, ES, GR, IE, LU, MC, NL, PT, SE)

1. Composition constituée essentiellement de :
(A) au moins un hydrofluorocarbure sélectionné parmi le difluorométhane et le 1,1,1-trifluoroéthane;
(B) pentafluoroéthane; et
(C) pentane.

2. Composition selon la revendication 1, dans laquelle le composant (A) est le difluorométhane.

3. Composition selon la revendication 1, dans laquelle le composant (A) est le 1,1,1-trifluoroéthane.

4. Composition selon l'une quelconque des revendications 1 à 3, qui comprend de 10 à 70 % en poids de composant (A), de 10 à 80 % en poids de composant (B) et de 1 à 10 % en poids de composant (C).

5. Composition selon la revendication 4, qui comprend de 20 à 60 % en poids de composant (A), de 20 à 60 % en poids de composant (B) et de 1 à 7 % en poids de composant (C).

6. Composition selon la revendication 5, qui comprend de 35 à 60 % en poids de composant (A), de 35 à 60 % en poids de composant (B) et de 2 à 6 % en poids de composant (C).

7. Composition comprenant:
(A) au moins un hydrofluorocarbure choisi parmi le difluorométhane et le 1,1,1-trifluoroéthane;
(B) du pentafluoroéthane;
(C) au moins un hydrocarbure ayant de 2 à 6 atomes de carbone; et
(D) du 1,1,1,2-tétrafluoréthane,
à la condition que, lorsque le composant (A) est le difluorométhane, alors le composant (C) est le pentane.

8. Composition selon la revendication 7, dans laquelle le composant (A) est le difluorométhane.

9. Composition selon la revendication 7, dans laquelle le composant (A) est le 1,1,1-tétrafluoroéthane.

10. Composition selon la revendication 9, dans laquelle le composant (C) est au moins un hydrocarbure choisi parmi le propane et le pentane.

11. Composition selon l'une quelconque des revendications 7 à 10, qui comprend de 10 à 70 % en poids de composant (A), de 10 à 80 % en poids de composant (B), de 1 à 10 % en poids de composant (C) et de 1 à 60 % en poids de composant (D).

12. Composition comprenant de 10 à 30 % en poids de difluorométhane, de 30 à 80 % en poids de pentafluoroéthane, de 1 à 7 % en poids de propane et de 9 à 50 % en poids de 1,1,1,2-tétrafluoroéthane.

13. Composition selon la revendication 12, qui comprend de 10 à 25 % en poids de difluorométhane, de 35 à 75 % en poids de pentafluoroéthane, de 2 à 6 % en poids de propane et de 13 à 45 % en poids de 1,1,1,2-tétrafluoroéthane.

14. Composition comprenant de 10 à 30 % en poids de difluorométhane, de 20 à 45 % en poids de pentafluoroéthane, de 1 à 7 % en poids de propane et de 30 à 55 % en poids de 1,1,1,2-tétrafluoroéthane.

15. Composition selon la revendication 14, qui comprend de 15 à 30 % en poids de difluorométhane, de 20 à 30 % en poids de pentafluoroéthane, de 2 à 6 % en poids de propane et de 45 à 55 % en poids de 1,1,1,2-tétrafluoroéthane.

16. Composition selon la revendication 9, qui comprend de 20 à 60 % en poids de 1,1,1-trifluoroéthane, de 20 à 60 % en poids de pentafluoroéthane, de 1 à 7 % en poids du ou des hydrocarbure(s) et de 1 à 20 % en poids de 1,1,1,2-tétrafluoroéthane.

17. Composition selon la revendication 16, qui comprend de 35 à 60 % en poids de 1,1,1-trifluoroéthane, de 35 à 60 % en poids de pentafluoroéthane, de 2 à 6 % en poids du ou des hydrocarbure(s) et de 1 à 10 % en poids de 1,1,1,2-tétrafluoroéthane.

18. Système de réfrigération ou de conditionnement d'air, contenant une composition de réfrigérant selon l'une quelconque des revendications 1 à 17.

19. Utilisation dans un système de réfrigération ou de conditionnement d'air d'une composition de réfrigérant selon l'une quelconque des revendications 1 à 17.

20. Procédé pour fournir un refroidissement comprenant la condensation d'une composition de réfrigérant selon l'une quelconque des revendications 1 à 17 et ensuite son évaporation dans une relation d'échange thermique avec un fluide devant être refroidi.

## Revendications (Revendications pour l'(les) Etat(s) contractant(s) suivant(s): DE, FR, GB, IT)

1. Composition constituée essentiellement de :
(A) au moins un hydrofluorocarbure, sélectionné parmi le difluorométhane et le 1,1,1-trifluoroéthane;
(B) pentafluoroéthane; et
(C) pentane.

2. Composition selon la revendication 1, dans laquelle le composant (A) est le difluorométhane.

3. Composition selon la revendication 1, dans laquelle le composant (A) est le 1,1,1-trifluoroéthane.

4. Composition selon l'une quelconque des revendications 1 à 3, qui comprend de 10 à 70 % en poids de composant (A), de 10 à 80 % en poids de composant (B) et de 1 à 10 % en poids de composant (C).

5. Composition selon la revendication 4, qui comprend de 20 à 60 % en poids de composant (A), de 20 à 60 % en poids de composant (B) et de 1 à 70 % en poids de composant (C).

6. Composition selon la revendication 5, qui comprend de 35 à 60 % en poids de composant (A), de 35 à 60 % en poids de composant (B) et de 2 à 6 % en poids de composant (C).

7. Composition comprenant:
(A) au moins un hydrofluorocarbure choisi parmi le difluorométhane et le 1,1,1-trifluoroéthane;
(B) du pentafluoroéthane;
(C) au moins un hydrocarbure ayant de 2 à 6 atomes de carbone; et
(D) du 1,1,1,2-tétrafluoréthane,
à la condition que, lorsque le composant (A) est le difluorométhane, la composition est une composition comprenant de 10 à 30 % en poids de difluorométhane, de 30 à 80 % en poids de pentafluoroéthane, de 1 à 7 % en poids de propane et de 9 à 50 % en poids de 1,1,1,2-tétrafluoroéthane, ou une composition comprenant de 10 à 30 % en poids de difluorométhane, de 20 à 45 % en poids de pentafluoroéthane, de 1 à 7 % en poids de propane et de 30 à 55 % en poids de 1,1,1,2-tétrafluoroéthane.

8. Composition selon la revendication 7, dans laquelle le composant (A) est le 1,1,1-tétrafluoroéthane.

9. Composition selon la revendication 8, dans laquelle le composant (C) est au moins un hydrocarbure choisi parmi le propane et le pentane.

10. Composition selon la revendication 8 ou la revendication 9, qui comprend de 10 à 70 % en poids de composant (A), de 10 à 80 % en poids de composant (B), de 1 à 10 % en poids de composant (C) et de 1 à 60 % en poids de composant (D).

11. Composition selon la revendication 7, dans laquelle le composant (A) est le difluorométhane, et la composition comprend de 10 à 25 % en poids de difluorométhane, de 35 à 75 % en poids de pentafluoroéthane, de 2 à 6 % en poids de propane et de 13 à 45 % en poids de 1,1,1,2-tétrafluoroéthane.

12. Composition selon la revendication 7, dans laquelle le composant (A) est le difluorométhane, et la composition comprend de 15 à 30 % en poids de difluorométhane, de 20 à 30 % en poids de pentafluoroéthane, de 2 à 6 % en poids de propane et de 45 à 55 % en poids de 1,1,1,2-tétrafluoroéthane.

13. Composition selon la revendication 8 ou la revendication 9, qui comprend de 20 à 60 % en poids de 1,1,1-trifluoroéthane, de 20 à 60 % en poids de pentafluoroéthane, de 1 à 7 % en poids du ou des hydrocarbure(s) et de 1 à 20 % en poids de 1,1,1,2-tétrafluoroéthane.

14. Une composition selon la revendication 13, qui comprend de 35 à 60 % en poids de 1,1,1-trifluoroéthane, de 35 à 60 % en poids de pentafluoroéthane, de 2 à 6 % en poids du ou des hydrocarbure(s), et de 1 à 10 % en poids de 1,1,1,2-tétrafluoroéthane.

15. Système de réfrigération ou de conditionnement d'air, contenant une composition de réfrigérant selon l'une quelconque des revendications 1 à 14.

16. Utilisation, dans un système de réfrigération ou de conditionnement d'air, d'une composition de réfrigérant selon l'une quelconque des revendications 1 à 14.

17. Procédé pour fournir un refroidissement, comprenant la condensation d'une composition de réfrigérant selon l'une quelconque des revendications 1 à 14 et, ensuite, l'évaporation de celle-ci, dans une relation d'échange thermique avec un fluide devant être refroidi.
